# EUROPEAN PATENT SPECIFICATION

(11) **EP 0 645 185 B1**
(45) Date of publication and mention of the grant of the patent: **08.05.2002**
(21) Application number: 94115193.8
(22) Date of filing: 27.09.1994
(51) Int. Cl.: B01J 29/40, B01D 53/94, B01J 37/00

(54) **Exhaust gas control catalyst compositions comprising modified ZSM-5 zeolites, their use and process for producing the same**
Abgaskatalysatorzusammensetzungen mit modifizierten ZSM-5 Zeolithen, deren Verwendung und Verfahren für die Herstellung derselben
Compositions de catalyseur de traitement de gaz d'échappement contenant des zéolithes ZSM-5 modifiées, leur utilisation et procédé pour leur préparation

(30) Priority: 27.09.1993 JP 24009693; 29.09.1993 JP 24335093; 30.09.1993 JP 24466593; 28.06.1994 JP 14594994
(43) Date of publication of application: 29.03.1995
(73) Proprietor: HONDA GIKEN KOGYO KABUSHIKI KAISHA, Minato-ku, Tokyo 107 (JP)
(72) Inventor: Fujisawa, Yoshikazu, Minato-Ku, Tokyo (JP); Sugiyama, Tomomi, Minato-Ku, Tokyo (JP); Shimizu, Haruhiko, Minato-Ku, Tokyo (JP); Fukuda, Kaoru, Minato-Ku, Tokyo (JP); Naka, Takahiro, Minato-Ku, Tokyo (JP); Terada, Kazuhide, Minato-Ku, Tokyo (JP); Endoh, Tetsuo, Minato-Ku, Tokyo (JP)
(74) Representative: Fincke, Karl Theodor, Dipl.-Phys. Dr.

(56) References cited:
- EP-A- 0 035 830
- EP-A- 0 142 313
- EP-A- 0 223 396
- EP-A- 0 286 967
- EP-A- 0 350 367
- EP-A- 0 407 203
- EP-A- 0 485 180
- EP-A- 0 488 867
- EP-A- 0 503 500
- EP-A- 0 609 112
- EP-A- 0 612 563
- EP-A- 0 671 208
- US-A- 3 493 519
- US-A- 3 941 871
- US-A- 4 036 739
- US-A- 4 468 475
- Halasz, I.; Horvath, J.; Mandy, T.; Schmidt, L.; Tasnadi, E. in "Zeolites-Synthesis, Structure, Technology and Application", Drzaj, B.; Hocevar, S.; Pejovnik, S. (Eds.), Elsevier, Amsterdam, 1
- Meier, W.M.; Olson, D.H. "Atlas of Zeolite Structure Types" (IZA), 2nd. ed., Butterworths, London, 1987; pages 62-63 and 100-101
- Olson, D.H.; Kokotailo, G.T.; Lawton, S.L.; Meier, W.M. "Crystal Structure and Structure-Related Properties of ZSM-5", J. Phys. Chem. 85 (1981), pages 2238-2243
- Chemical Abstracts no. 114: 72611v (Van Koningsveld, H.)
- Flanigen, E.M.; Bennett, J.M.; Grose, R.W.; Cohen, J.P.; Patton, R.L.; Kirchner, R.M.; Smith, J.V. "Silicalite, a new hydrophobic crystalline silica molecular sieve", Nature 271 (1978), pages
- FYFE C.A.; GOBBI G.C.; KLINOWSKI J.; THOMAS J.M.; RAMDAS S.: 'Resolving crystallographically distinct tetrahedral sites in silicalite and ZSM-5 by solid-state NMR' NATURE vol. 296, 1982, pages 530 - 533
- Chemical Abstracts no. 108: 85579s (Van Koningsveld, H.; Jansen, J.C.; Van Bekkum, H.)
- Chemical Abstracts no. 113: 15191p (Van Koningsveld, H.; Jansen, J.C.; Van Bekkum, H.)
- KLINOWSKI J.; THOMAS J.M.; FYFE C.A.; GOBBI G.C.: 'Monitoring of structural changes accompanying ultrastabilization of faujasitic zeolite catalysts' NATURE vol. 296, 1982, pages 533 - 536

## Description

### BACKGROUND OF THE INVENTION

### FIELD OF THE INVENTION

The present invention relates to a catalyst composition for internal combustion engine exhaust gas conversion comprising a highly active ZSM-5 zeolite, its use and a process for producing the same.

Within this specification, the characterisations "lowly active" and "highly active" denote ZSM-5 zeolite starting material and a ZSM-5 zeolite modified by at least an acid treatment, respectively.

Furthermore, the characterisations "irregular" and "regular" ZSM-5 type crystal structure are intended to denote the corresponding crystal structures in said modified and starting material ZSM-5 zeolites, respectively.

The term "single-lattice volume" is intended to denote the unit all volume of said crystal structures.

### DESCRIPTION OF THE PRIOR ART

Conventionally, a ZSM-5 zeolite has been regarded as a noteworthy material because of its capability of purifying an exhaust gas, thermal stability and the like, and various results of studies about them have been presented (for example, see Japanese Patent Application Laid-open No.126941/90).

However, the conventional ZSM-5 zeolite suffers from a problem that its activity is relatively low and is deteriorated in a short time, if it is exposed to an exhaust gas having a high temperature because its heat resistance is poor.

Such a low heat resistance of the ZSM-5 zeolite is due to its crystal structure and also due to a following fact: oxides, hydroxides, various salts and the like including alkali metals and alkaline earth metals are used as starting materials for preparing the ZSM-5 zeolite, and for this reason, when the ZSM-5 zeolite is exposed to a high temperature, for example, sodium (Na) contained in the starting material reacts with water of crystallization of the ZSM-5 zeolite to produce sodium hydroxide or oxide which causes aluminum forming a three-dimensional skeleton structure of the ZSM-5 zeolite to be eluted, resulting in a destructed three-dimensional skeleton structure.

There is conventionally known exhaust emission control devices in which a hydrocarbon adsorber including a zeolite is disposed in an exhaust system upstream of an exhaust emission control catalyst to provide an improvement in conversion of hydrocarbons (HCs) contained in an exhaust gas having a low temperature immediately after the start of an engine (for example, see Japanese Patent Application Laid-open No.75327/90). Further, there are conventionally known ZSM-5 zeolites having a metal such as copper (Cu) or the like carried therein by an ion exchange process to provide an improvement in conversion of NO_{X} resulting from combustion of a lean air-fuel mixture containing an excess of oxygen (for example, see Japanese Patent Application Laid-open No.283727/88).

A heat resistance to 900 to 1,000°C is required for components of an exhaust emission control catalyst in an engine. However, the prior art device and catalyst suffer from a problem that the heat-resisting temperature of the zeolite in the device and catalyst is about 700 °C and hence, the adsorber and the catalyst is poor in high temperature durability and degraded in performance in a short time. In addition, the prior art device is also accompanied by a problem of a complicated construction, because the exhaust emission control catalyst and the adsorber are required.

There are processes for producing a highly active ZSM-5 zeolite for adsorbing hydrocarbons, wherein a lowly active ZSM-5 zeolite is repeatedly subjected to multiple cycles each consisting of a steam treatment and an acid treatment (for example, see Japanese Patent Publication No. 15000/88 or EP-A-0 035 830).

The reason why the multiple cycles are essential in the prior art process is that the hydrocarbon adsorbing capability cannot be enhanced unless the multiple cycles are repeated, because the temperature for the steam treatment is set at a value at which the lowly active ZSM-5 zeolite is not destructed, e.g., at a low level of 538°C.

However, the use of a multiple-cycle system as described above results in a degraded productivity of a highly active ZSM-5 zeolite and an in increased cost of production.

EP-A-0 485 180 discloses a catalyst composition for internal combustion engine exhaust gas conversion comprising a ZSM-5 zeolite treated with boiling HCl, showing a heat-resisting temperature of about 900°C, and a catalytic element comprising a ceramic carrier and a catalytic metal carried thereon, selected from Pt, Pd, Rh, Ir and Ru. The zeolite is ion-exchanged with said catalytic metal as well.

### SUMMARY OF THE INVENTION

It is an object of the present invention to provide a catalyst composition for internal combustion engine exhaust gas conversion comprising a highly active ZSM-5 zeolite having an excellent heat resistance.

It is another object of the present invention to provide a highly active ZSM-5 zeolite having a heat resistance considerably enhanced by specifying the content of an alkaline metal or the like.

It is a further object of the present invention to provide a catalyst composition for internal combustion engine exhaust gas conversion comprising a highly active ZSM-5 zeolite having an excellent heat resistance and a simplified configuration, wherein the ZSM-5 zeolite has a function of adsorbing hydrocarbons contained in a low-temperature exhaust gas immediately after the start of an engine, and is capable of immediately converting the adsorbed hydrocarbons and fresh hydrocarbons (HCs) as the temperature of a catalytic element is risen by the exhaust gas and moreover, of converting nitrogen oxides (NO_{X}) produced with combustion of a lean air-fuel mixture containing an excess of oxygen.

To achieve the above objects according to the present invention, there is provided such a composition as set out in claim 1.

If the ZSM-5 zeolite has the irregular crystal structure as described above, the ZSM-5 zeolite is highly activated to exhibit a high purifying capability in purification of an exhaust gas from an engine, and provide a heat resisting temperature of about 1,000°C.

If the content C₁ of the metal selected from the alkaline metals or the like is specified at a value in the above-described range, it is possible to avoid the destruction of a three-dimensional skeleton structure due to such metal, thereby providing a highly active ZSM-5 zeolite having a considerably enhanced heat resistance. However, if the content C₁ of the metal is larger than 450 ppm (C₁ > 450 ppm), a resulting ZSM-5 zeolite having a lower heat resistance.

The ZSM-5 zeolite having an irregular crystal structure as described above has a function of adsorbing hydrocarbons (HCs) in a low-temperature exhaust gas with a high capture rate immediately after the start of the engine, because it has a high-temperature durability and is highly activated. As the temperature of the exhaust gas is risen, the adsorbed hydrocarbons are released and hence, such released hydrocarbons and fresh hydrocarbons are converted immediately by the heated catalytic element. Moreover, the highly active ZSM-5 zeolite containing the catalytic element exhibits a converting capability even to nitrogen oxides produced with combustion of a lean air-fuel mixture containing an excess of oxygen.

In this case, if the catalytic metal or the like is carried directly in the highly active ZSM-5 zeolite, much of such catalytic metal or the like is present in fine pores. For this reason, it is feared that the catalytic metal or the like may be sintered in an activated atmosphere within the fine pores to bring about a heat deterioration of catalytic action. If the catalytic metal or the like is carried in the ceramics carrier and mixed to the highly active zeolite or laminated thereto to form a laminated structure, as described above, the problem of such heat deterioration can be avoided.

In addition, because the catalytic element is present in a mixed or laminated state with the highly active ZSM-5 zeolite, the constitution is simplified as compared with the prior art.

Further, it is an object of the present invention to provide a process for producing a catalyst composition for internal combustion engine exhaust gas conversion comprising a highly active ZSM-5 zeolite, which enables a mass production of the highly active ZSM-5 zeolite component.

To achieve the above object, according to the present invention, there is provided a process for producing a catalyst composition for internal combustion engine exhaust gas conversion comprising a highly active ZSM-5 zeolite as set out in claim 13.

With this process, it is possible to easily mass-produce said highly active ZSM-5 zeolite component having an irregular ZSM-5 type crystal structure.

Due to the acid treatment being employed in the producing process, the alkaline metal or the like in the lowly active ZSM-5 zeolite is substituted by hydrogen ion. If the steam treatment or the boiled water treatment is employed, hydrogen ion is bonded at alkaline metal-removed sites resulting from a reaction of the alkaline metal or the like in the lowly active ZSM-5 zeolite with water active at a high temperature.

Therefore, it is possible to easily produce a highly active ZSM-5 zeolite having a heat resistance as described above by utilizing the acid treatment, and optionally further a steam treatment and/or a boiled-water treatment

Yet further, it is an object of the present invention to provide a catalyst composition for internal combustion engine exhaust gas conversion comprising a obtainable by a producing process of the type described above, wherein a highly active ZSM-5 zeolite having an excellent hydrocarbon adsorbing capability and an excellent heat resistance can be produced only bY one run of each of an acid treatment and a heating treatment in the presence of water.

To achieve the above object, according to the present invention, there is provided a catalyst composition for internal combustion engine exhaust gas conversion comprising a obtainable by a process as defined above, comprising an intermediate step of subjecting a lowly active ZSM-5 zeolite to an acid treatment to provide a heat-resistant intermediate product having a heat-resisting temperature higher than that of the lowly active ZSM-5 zeolite, and a final step of heating said intermediate product at a temperature near the heat-resisting temperature but not exceeding the heat-resisting temperature in the presence of water to enhance the hydrocarbon adsorbing capability.

The heat-resisting temperature of a common lowly active ZSM-5 zeolite, i.e., the temperature at which the crystal structure of the common lowly active ZSM-5 zeolite is not destructed, is on the order of 700 °C. However, if such a lowly active ZSM-5 zeolite is subjected to one run of the acid treatment at the intermediate step, a de-aluminization occurs, and an impurity (or impurities) is removed, thereby improving the crystallizability of the intermediate product and inhibiting the generation of nuclei of pyrolytically decomposed products. Thus, the heat-resisting temperature of the intermediate product is increased up to about 1,000°C.

In the final step, the heating temperature in the presence of water can be set at about 900°C by utilizing the heat resistance of such intermediate product. Therefore, only one run of this step enables the de-aluminization of the intermediate product to further advance to enhance the hydrophobic nature of the intermediate product, thereby maximizing the hydrocarbon adsorbing capability. In addition, the destruction of the crystal structure at this temperature is avoided and therefore, the heat resistance of the highly active zeolite cannot be damaged.

The above and other objects, features and advantages of the invention will become apparent from the following description of preferred embodiments taken in conjunction with the accompanying drawings.

### BRIEF DESCRIPTION OF THE DRAWINGS

Fig.1 illustrates one example of a regular ZSM-5 type crystal structure which a lowly active ZSM-5 zeolite has:
Fig.2 illustrates one example of an irregular ZSM-5 type crystal structure which a highly active ZSM-5 zeolite has;
Fig.3 is a graph illustrating a Si chemical shift, δ with regard to a lowly active ZSM-5 zeolite and a highly active ZSM-5 zeolite as measured by a Si solid NMR;
Fig.4 is a graph illustrating the relationship between the single-lattice volume V₁ and the amount of propylene gas (C₃H₆) adsorbed;
Fig.5 is a graph illustrating the relationship between the gas temperature and the conversion of nitrogen monoxide (NO);
Fig.6 is a graph in a first example illustrating the relationship between the Na content and the heat-resisting temperature;
Fig.7 is a graph in a second example illustrating the relationship between the Na content and the heat-resisting temperature;
Fig.9 is a graph illustrating the relationship between the content of Fe, Cu, Cr or Ni and the heat-resisting temperature;
Fig.10 is a sectional view of a mixed-type highly active ZSM-5 zeolite;
Fig.11 is a sectional view of a laminated-type highly active ZSM-5 zeolite;
Fig.12 is a graph illustrating the relationship between the time lapsed after the start of flowing of a gas in an initial performance test for a highly active ZSM-5 zeolite containing a catalytic element and the conversion of hydrocarbons;
Fig.13 is a graph illustrating the relationship between the time lapsed after the start of flowing of a gas in a durability test for the highly active ZSM-5 zeolite containing the catalytic element and the conversion of hydrocarbons;
Fig.14 is a graph illustrating the relationship between the time lapsed after the start of an engine and the level of hydrocarbons discharged;
Fig.15 is a graph illustrating the relationship between the temperature of a gas in the initial performance test for the highly active ZSM-5 zeolite containing the catalytic element and the conversion of nitrogen oxides (NO_{X});
Fig.16 is a graph illustrating the relationship between the temperature of a gas after the durability test for the highly active ZSM-5 zeolite containing the catalytic element and the conversion of nitrogen oxides (NO_{X});
Fig.17 shows a water-adsorbing reaction of a heat-resistant intermediate product;
Fig.18 shows a water-adsorbing reaction of a heat-resistant intermediate product in a steam treatment;
Fig.19 is a graph illustrating the relationship between the amount of highly active ZSM-5 zeolite carried and the adsorption of hydrocarbons; and
Fig.20 is a graph illustrating the relationship between the temperature for the steam treatment and the adsorption of hydrocarbons.

### DESCRIPTION OF THE PREFERRED EMBODIMENTS

### (First Embodiment (illustrative): modified ZSM-5 zeolite component according to the invention)

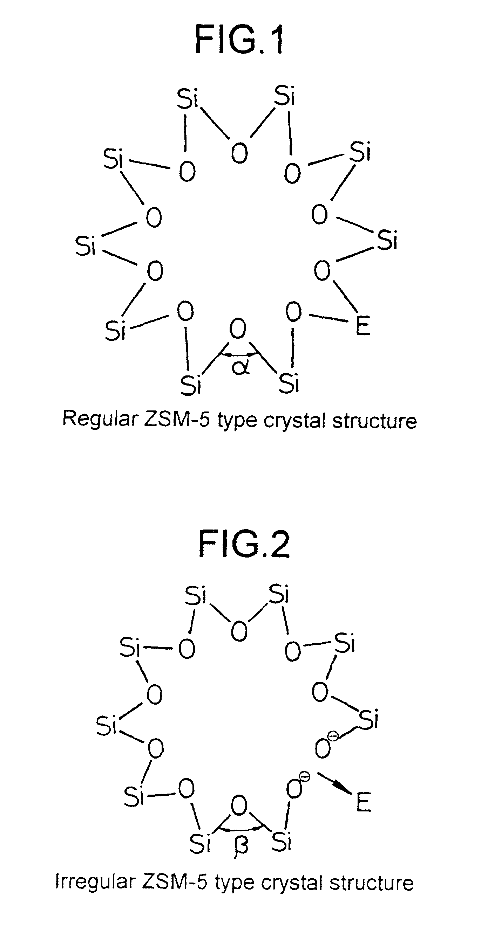

A lowly active ZSM-5 zeolite has a regular ZSM-5 type crystal structure. Fig.1 illustrates one example of such lowly active ZSM-5 zeolite. In this crystal structure, Si as well as an element E (e.g., B, Al, Sc, Ga, Y, In, etc.) belonging to Si and Group IIIa and/or Group IIIb of Periodic Table are bonded to an oxygen ring consisting of 10 oxygen atoms.

If a lowly active ZSM-5 zeolite having such a crystal structure is subjected to an activating treatment to remove the element E, a silicon ring located around the oxygen ring is shrunk to fill voids generated by removing the element E. This is accompanied by an increase in bond angle of Si-O-Si from α (Fig.1) to β (β > α), and as a result, the oxygen ring is also shrunk.

The generation of such a phenomenon ensures that a resulting highly active ZSM-5 zeolite has an irregular ZSM-5 type crystal structure (Fig.2). If the oxygen and silicon rings are shrunk, a single-lattice volume V₁ determined in the form of a product a x b x c of lattice constants a, b and c by an X-ray diffraction is decreased as compared with a similar single-lattice volume V₂ in the regular ZSM-5 type crystal structure (i.e., V₁ < V₂).

The shrinkage of the oxygen ring increases the surface energy within the ring. Therefore, a ZSM-5 zeolite produced after the activating treatment has an increased activity and an enhanced heat resistance.

It is desirable that the single-lattice volume V₁ in the irregular ZSM-5 type crystal structure is in a range of V₁ ≦ 5373Å³. If V₁ becomes larger than 5373Å³, the activity of the highly active ZSM-5 zeolite tends to be reduced.

The lowly active ZSM-5 zeolite contains at least one metal selected from alkaline metals, e.g., Na and K, or at least one metal selected from alkaline earth metals, e.g., Ca and Mg. In the highly active ZSM-5 zeolite, the content C₁ of such metal is set in a range represented by C₁ ≦ 450 ppm in order to increase the activity.

The lowly active ZSM-5 zeolite may contain an impurity (or impurities) which is at least one of Fe, Cu, Ni and Cr and which festers the heat resistance. In this case, the content C₂ of such impurity is set in a range represented by C₂ ≦ 200 ppm in order to increase the heat resistance.

The activating treatment which is used is at least an acid treatment, and optionally further a steam treatment and/or a boiled-water treatment applied to the lowly active ZSM-5 zeolite. During this activating treatment, impurities such as an alkali metal, e.g., Na or the like, an alkaline earth metal, e.g., Ca or the like, and Fe can be removed such that they are within the above-described ranges of the contents C₁ and C₂. The removal of the alkali metal and alkaline metal is achieved by a substitution with hydrogen, and thus, the adsorbing active sites within small pores in the highly active ZSM-5 zeolite are increased. This increase is produced uniformly in all the pores, leading to an enhanced adsorbing capability of the highly active ZSM-5 zeolite.

The procedure which is employed as the acid treatment involves the steps of: heating a hydrochloric acid solution of 0.5 to 5 N up to a temperature of 70 to 90°C, and immersing the lowly active ZSM-5 zeolite into such hydrochloric acid solution.

The procedure which is employed as the boiled-water treatment involves the steps of: subjecting the lowly active ZSM-5 zeolite to a hydrating treatment, rising the temperature of an atmosphere around the lowly active ZSM-5 zeolite in the hydrated state to a level of 550 °C to 600 °C, maintaining it in a high-temperature atmosphere for four hours.

Further, the procedure which is employed as the steam treatment involves the steps of: maintaining the lowly active ZSM-5 zeolite for 10 to 20 hours in an atmosphere containing about 10 % of water and at a temperature of 750 to 900°C.

The acid treatment may be utilized alone or in combination with boiled-water and/or steam treatments, and may be repeated if necessary.

Particular examples will be described below.

### A. Production of Highly active ZSM-5 zeolite

A lowly active ZSM-5 zeolite was selected which had crystal constants a = 20.0871Å, b = 19.9439Å and c = 13.4205Å, a single-lattice volume V₂ = 5376.5Å³, a content C₁ of an alkali metal Na = 2685.3 ppm and a content C₂ of impurity Fe = 1237 ppm.

First, the lowly active ZSM-5 zeolite was subjected to an acid treatment in such a manner that it was immersed into a 1 N hydrochloric acid solution at 80 °C for 10 hours. Then, the acid-treated lowly active ZSM-5 zeolite was subjected to a steam treatment in such a manner that it was retained for 20 hours in an atmosphere containing about 10 % of water and at a temperature of 900°C, thereby providing a highly active ZSM-5 zeolite. This zeolite will be referred to as a example 1 hereinafter.

Then, a single-lattice volume V₁ was determined for the example 1, and the results showed that the crystal lattice constants a, b and c were equal to 20.0835Å, 19.9313Å and 13.4141Å, respectively, and V₁ = 5369.5Å³. In addition, the Na content C₁ was equal to 110.5 ppm; the Fe content C₂ was equal to 53 ppm, and the molar ratio Mr of SiO₂/Al₂O₃ was equal to 52.

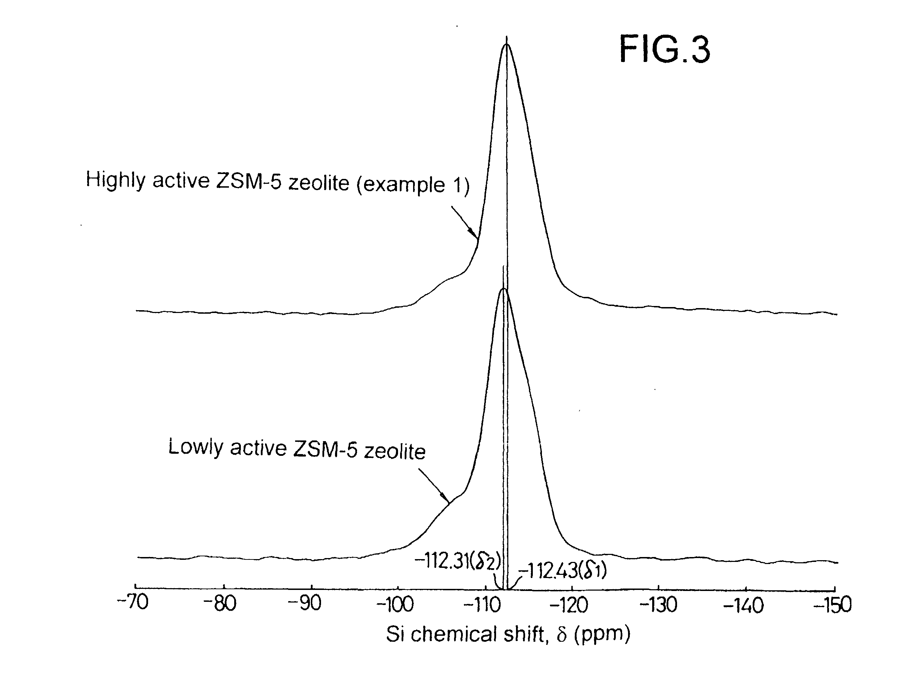

Fig.3 illustrates a Si chemical shift, δ (ppm) for the lowly active ZSM-5 zeolite and the highly active ZSM-5 zeolite (the example 1), as measured by a Si solid NMR (nuclear magnetic resonance) process. The Si chemical shift, δ₁ for the example 1 is equal to -112.43 ppm, and the Si chemical shift, δ₂ for the lowly active ZSM-5 zeolite is equal to -112.31 ppm.

Then, Si-O-Si bond angles α and β in the lowly active ZSM-5 zeolite and the example 1 were determined according to α (or β) = (-25.44 - δ)/0.5793 which is the equation of J.M. Thomas. And the result showed that α = 149.96 ° and β = 150.16 ° and therefore, β > α. Thus, a relation V₁ < V₂ is established between both the single-lattice volumes V₁ and V₂. In this case, the removed element E is Al.

Thereafter, the measurement of the heat-resiating temperature of the example 1 was carried out in a manner described below: First, a BET specific surface area, i.e., an intial BET specific surface area of the example was measured. Then, the example 1 was heated in an air atmosphere containing 10 % of water for 20 hours, and a BET specific surface area after heated by every 25 °C was measured. The temperature at which the BET specific surface area after heated maintained 95 % of the initial BET specific surface area was defined as a heat-resisting temperature for the example 1.

The heat-resisting temperature for the example 1 measured in this manner was of 1,000°C, while the heat-resisting temperature for the lowly active ZSM-5 zeolite measured in the same manner was of 725°C. For the example 1, an increment of 275°C was observed.

Various highly active ZSM-5 zeolites were produced in the same manner using various lowly active ZSM-5 zeolites.

Tables 1 to 3 show the Na content for the examples 1 (described above) to 7 of highly active ZSM-5 zeolites having a Na content C₁ in a range represented by 50 ppm ≦ C₁ ≦ 200 ppm (Table 1), for examples 8 to 13 of highly active ZSM-5 zeolites having a Na content C₁ in a range represented by 350 ppm ≦ C₁ ≦ 450 ppm (Table 2), and for examples 14 to 19 of highly active ZSM-5 zeolites having a Na content C₁ in a range represented by 500 ppm ≦ C₁ ≦ 1,000 ppm (Table 3). Tables 1 to 3 also show the Na content for the lowly active ZSM-5 zeolites used for producing such highly active ZSM-5 zeolites, and the activating treatment of the lowly active ZSM-5 zeolites.

Examples 5-7, 11-19 do not represent modified ZSM-5 zeolites according to the invention.

In the column of the activating treatment in each of Tables, an upper stage indicates a first treatment, i.e., an acid treatment, and a lower stage indicates a second treatment, i.e., a steam treatment. For example, in the acid treatment of the example 1, the term "80 °C, 1 N, HCl, 10 hr" means that the lowly active ZSM-5 zeolite is immersed in a 1 N hydrochloric acid solution for 10 hours. For example, in the steam treatment of the example 1, the term "10 % H₂O, 900 °C, 20 hr" means that the lowly active ZSM-5 zeolite obtained after the acid treatment is retained in an atmosphere containing 10 % of water at 900 °C for 20 hours.

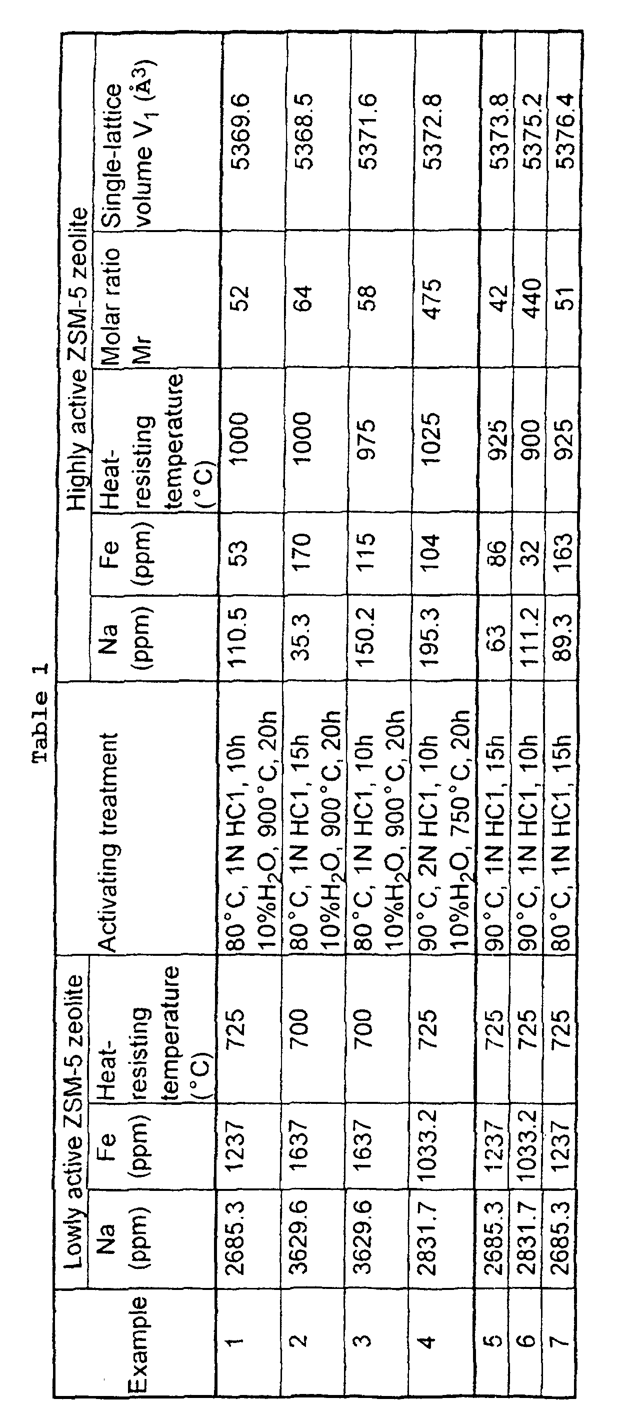

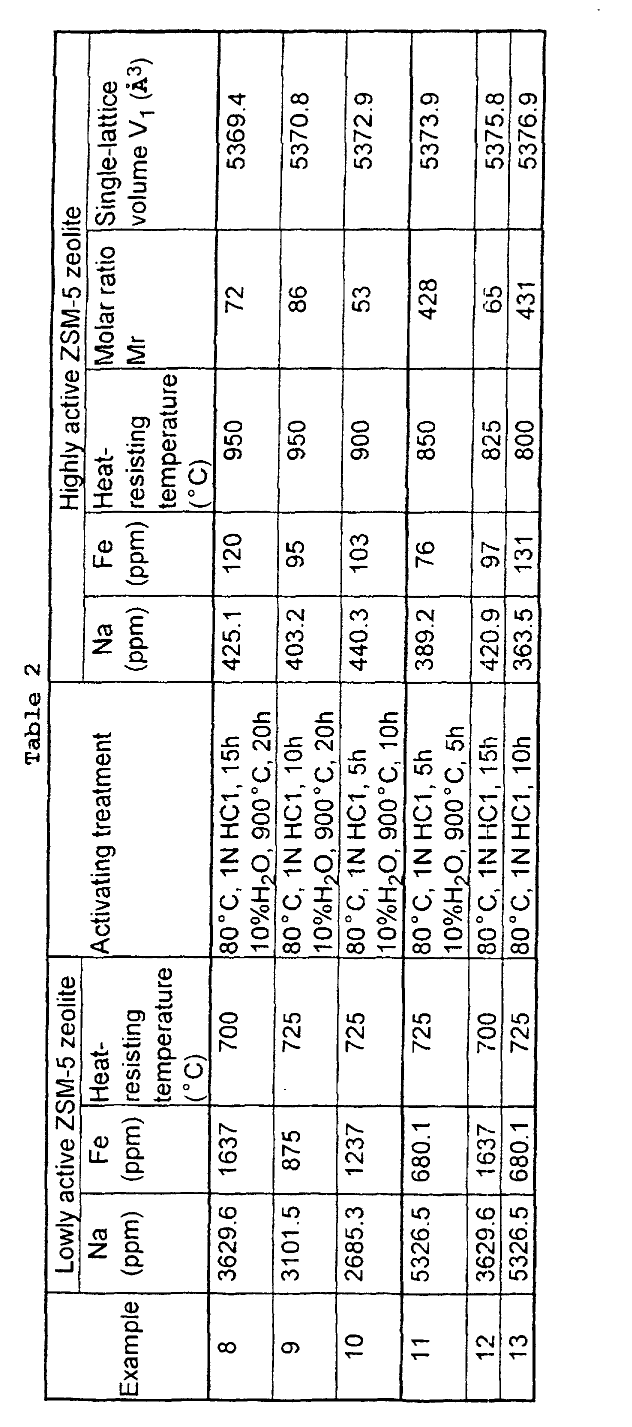

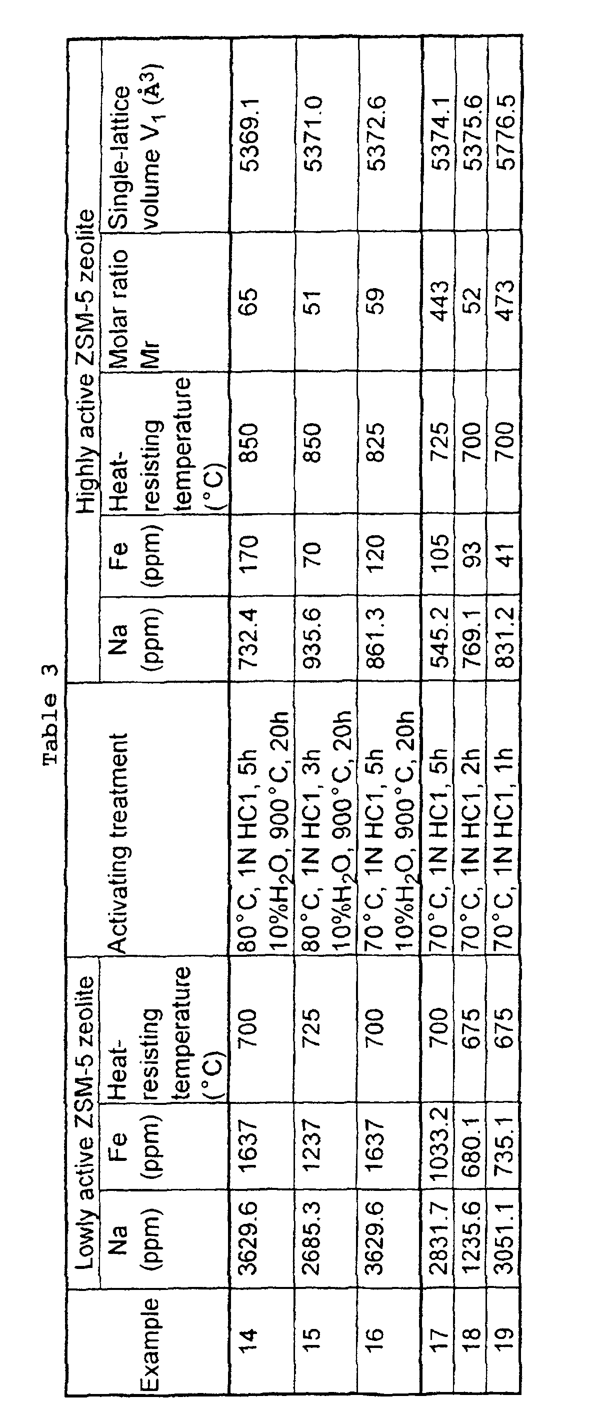

Table 4 shows values for the examples 2, 6 and 7 as being illustrative of crystal lattice constants a, b and c for the highly active ZSM-5 zeolites.

**Table 4**

| | Crystal lattice constants (Å) | | |
|---|---|---|---|
| Example | a | b | c |
| 2 | 20.0762 | 19.9349 | 13.4140 |
| 6 | 20.0906 | 19.9390 | 13.4184 |
| 7 | 20.0869 | 19.9439 | 13.4205 |

If the single-lattice volume V₁ is set equal to or smaller than 5373Å when the Na content C₁ ≦ 450 ppm and the Fe content C₂ ≦ 200 ppm, as in the examples 1 to 4 and 8 to 10 shown in Tables 1 and 2, the heat resistance of the highly ZSM-5 zeolite is enhanced, as compared with a case in which V₁ > 5373Å³. In the examples 14 to 16 in Table 3, the Na content C₁ is larger than 450 ppm, and the heat-resisting temperature is slightly lower. But an increase in heat-resisting temperature due to the single-lattice volume V₁ set at a value V₁ ≦ 5373Å³ is observed.

### B. Hydrocarbon adsorbing capability of highly active ZSM zeolite

The propylene gas (C₃H₆) adsorbing capability of each of the examples 1 to 19 was measured at room temperature using a porosimeter to provide results shown in Table 5. In this case, the purity of propylene gas was 99.8 %; the time of adsorption equilibrium was 300 seconds; and the adsorbing temperature was of 303 K.

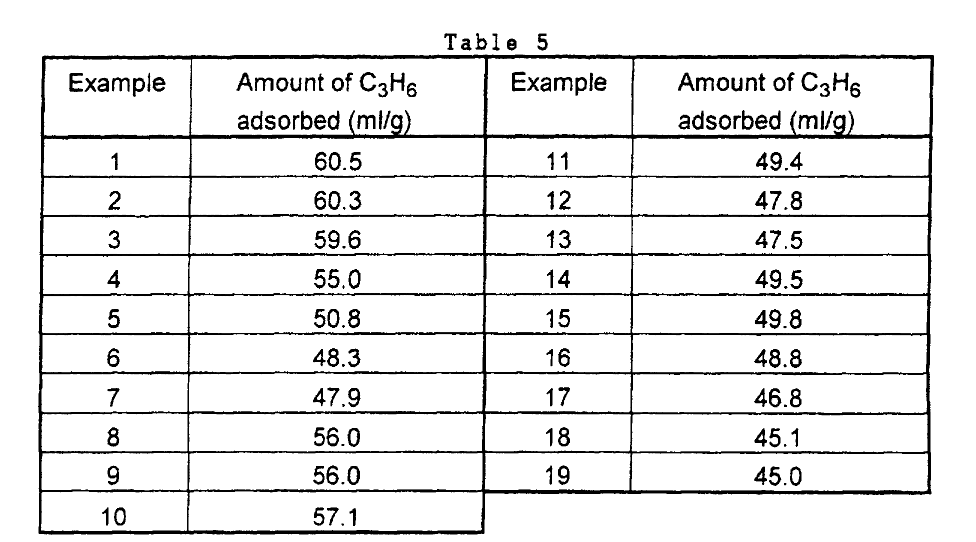

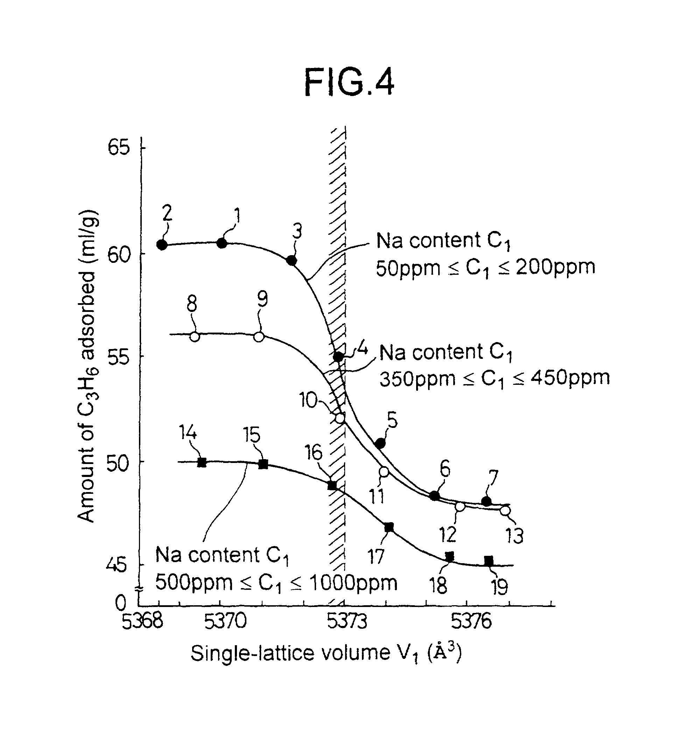

Fig.4 is a graph illustrating the relationship between the single-lattice volume V₁ and the amount of propylene gas adsorbed for the examples 1 to 19 which are classified into a group of the examples 1 to 7, a group of the examples 8 to 13 and a group of the examples 14 to 19 for three ranges of Na contents. In Fig.4, dots 1 to 19 correspond to the examples 1 to 19, respectively.

It can be seen from Fig.4 that if the single-lattice volume V₁ is set at a value V₁ ≦ 5373Å³, the amount of propylene gas adsorbed is increased as compared with a case in which V₁ > 5373Å³. It can be also seen that if the Na content C₁ is set at a value ≦ 450 ppm when V₁ ≦ 5373Å³, the amount of propylene gas adsorbed is increased as compared with a case in which C₁ > 450 ppm.

### C. Nitrogen oxide converting capability of catalyst comprising highly active ZSM-5 zeolite including cerium oxide (CeO₂) particulates

The highly active ZSM-5 zeolite has a function of partially oxidizing hydrocarbon (HC) to produce an active oxidized hydrocarbon (CHO) having a strong activatability, while the cerium oxide particulates have a nitrogen monoxide adsorbing capability. Therefore, the conversion of nitrogen monoxide by this catalyst is based on the reduction of nitrogen monoxide by the active oxidized hydrocarbon.

The catalyst was produced in a manner described below: (a) 40 % by weight of the example 1 of the highly active ZSM-5 zeolite was mixed with 60 % by weight of cerium oxide (CeO₂) particulates, and water and silica sol were then added to the mixture to prepare a slurry. (b) A honeycomb having a diameter of 25 mm and a length of 60 mm and including 300 cells was immersed into the honeycomb, thereby carrying the slurry in the honeycomb. (c) The slurry was air-dried and calcined at 400 °C for 12 hours to provide a nitrogen oxide (NO) converting member. In this case, the amount of catalyst carried is 140 g/liter and will be called an example 1a hereinafter.

Using the examples 6 and 18 (not representing modified ZSM-5 zeolites according to the invention) of the highly active ZSM-5 zeolites, examples 2a and 3a of catalysts were also produced in the same manner. The carried amount of the example 2a of catalyst produced using the example 6 was of 151 g/liter, and the carried amount of the example 3a of catalyst produced using the example 18 was of 153 g/liter.

Then, the examples 1a, 2a and 3a of the catalysts were subjected to a thermal deterioration treatment and then to a nitrogen oxide conversion test.

In the thermal deterioration treatment, each of the examples 1a, 2a and 3a of the catalysts was retained at 700°C for 20 hours in an atmosphere consisting of 10 % of water (H₂O), 10 % of oxygen gas (O₂) and the balance of nitrogen gas (N₂).

A test gas was prepared consisting of 1,200 ppm of propylene gas, 800 ppm of nitrogen monoxide, 8 % of oxygen gas (O₂), 1,000 ppm of carbon monoxide (CO), 10 % of carbon dioxide (CO₂), 10 % of water (H₂O) and the balance of nitrogen gas (N₂) , all by volume %. The nitrogen oxide (NO) conversion test was carried out using the test gas at a space velocity (S.V.) of 50,000 hr⁻¹ and with the gas temperature risen from ambient temperature to 600 °C at 15°C/min.

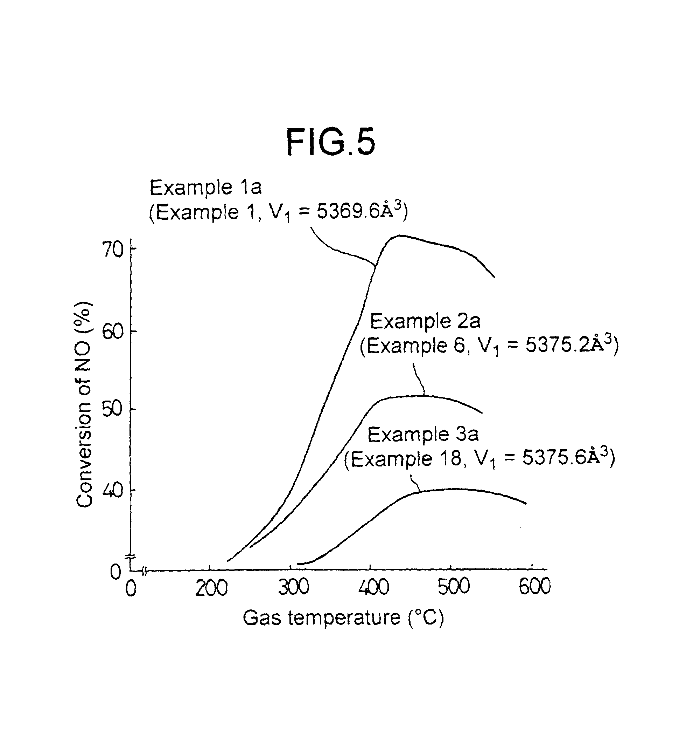

Fig.5 illustrates results of the NO conversion test. The % conversion of nitrogen monoxide (NO) is increased higher in the order of the examples 1a, 2a and 3a of the catalysts, because the examples 1, 6 and 18 of the highly active ZSM-5 zeolite used to produce them have more increased single-lattice volumes V₁ in the order named, i.e., V₁ of the example 1 ≦ 5373Å³, and V₁ of the examples 6 and 18 > 5373Å³. The maximum % conversion of NO was 71 % for the example 1a, 51 % for the example 2a and 39 % for the example 3a.

### (Second Embodiment (illustrative) : modified ZSM-5 zeolite component according to the invention)

A lowly active ZSM-5 zeolite was used which had a content C₁ of alkali metal Na of 2685.3 ppm and a content C₂ of impurity Fe of 1237 ppm.

First, the lowly active ZSM-5 zeolite was subjected to an acid treatment, wherein it was immersed in a 1N hydrochloric acid solution at 90 °C for 20 hours. Then, the acid-treated lowly active ZSM-5 zeolite was subjected to a stream treatment wherein it was retained in an atmosphere containing 10 % of water at 900 °C for 20 hours, thereby providing a highly active ZSM-5 zeolite which will be called an sample 1 hereinafter.

Then, the Na and Fe contents C₁ and C₂ and the molar ratio Mr of SiO₂/Al₂O₃ of the sample 1 were examined. The result showed that the Na content C₁ was equal to 0.1 ppm; the Fe content C₂ was equal to 85 ppm, and the molar ratio Mr of SiO₂/Al₂O₃ was equal to 57.

Thereafter, the heat-resisting temperature of the sample 1 was carried out in the same manner as in the first embodiment and it was found out that the heat-resisting temperature of the sample 1 was 950°C. On the other hand, the heat-resisting temperature of the lowly active ZSM-5 zeolite measured in the same manner was 725°C and thus, an increment of 225°C was observed in the sample 1.

Using the same type of lowly active ZSM-5 zeolites containing an alkali metal Na and an impurity Fe, various highly active ZSM-5 zeolites having a molar ratio Mr of SiO₂/Al₂O₃ ≦ 100 were produced in the same manner.

Tables 6 and 7 show Na contents and the like of the samples 1 (described above) to 10 of the highly active ZSM-5 zeolites, Fe contents and the like of the lowly active ZSM-5 zeolites used to produce the samples 1 to 10, and the activating treatment for the lowly active ZSM-5 zeolites. Samples 11 to 13 of lowly active ZSM-5 zeolites which are untreated products are also shown in Table 7.

The column of the activating treatment in each of Tables 6 and 7 is similar to that in each of Tables 1 to 3, and the samples 11 to 13 are untreated products, but the molar ratio of SiO₂/Al₂O₃ thereof are given in the column of the molar ratio of SiO₂/Al₂O₃ of the highly active ZSM-5 zeolite.

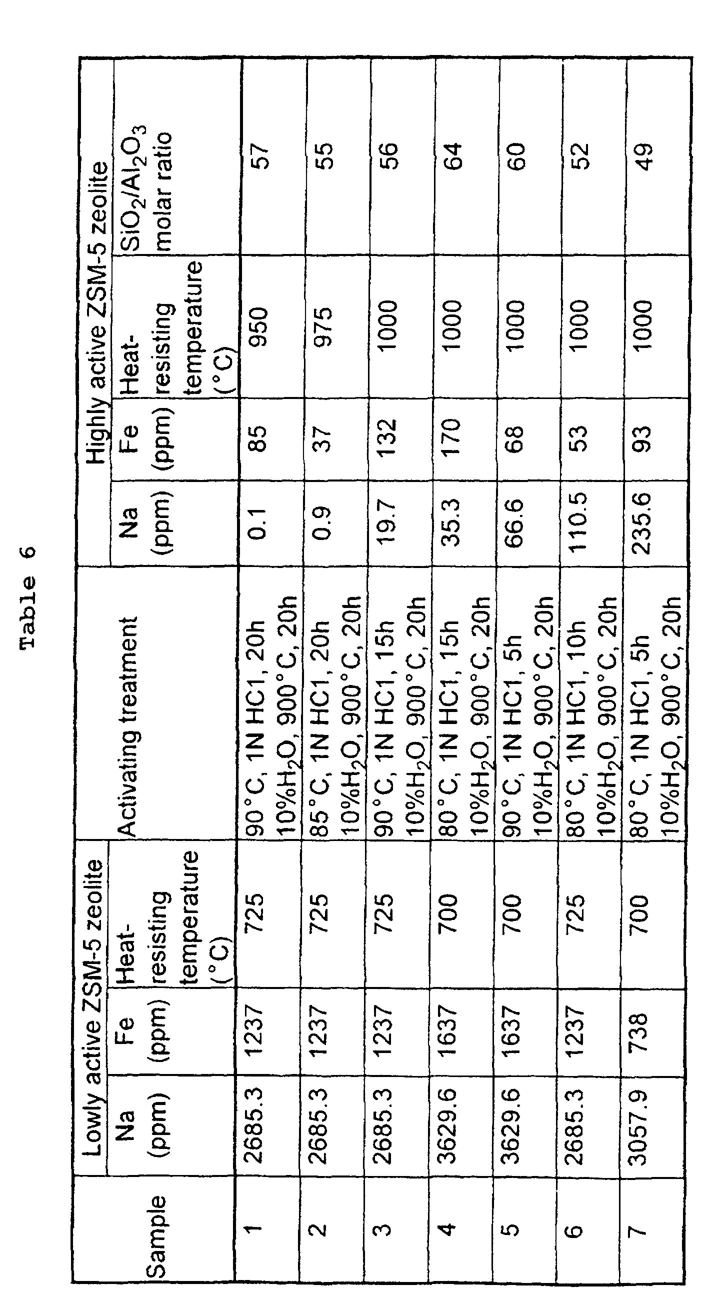

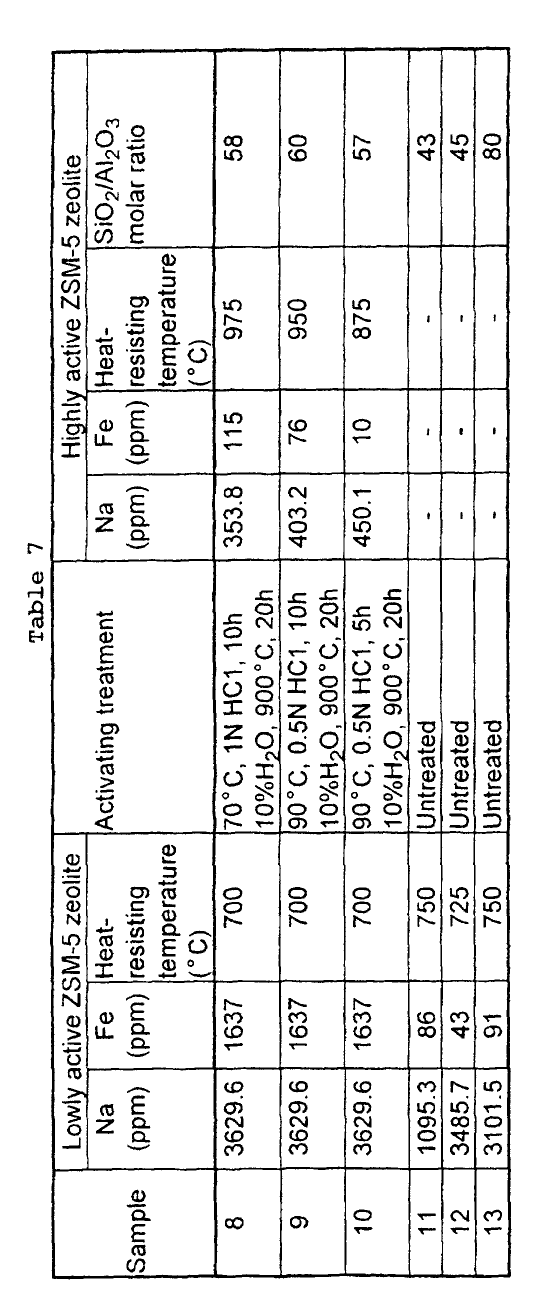

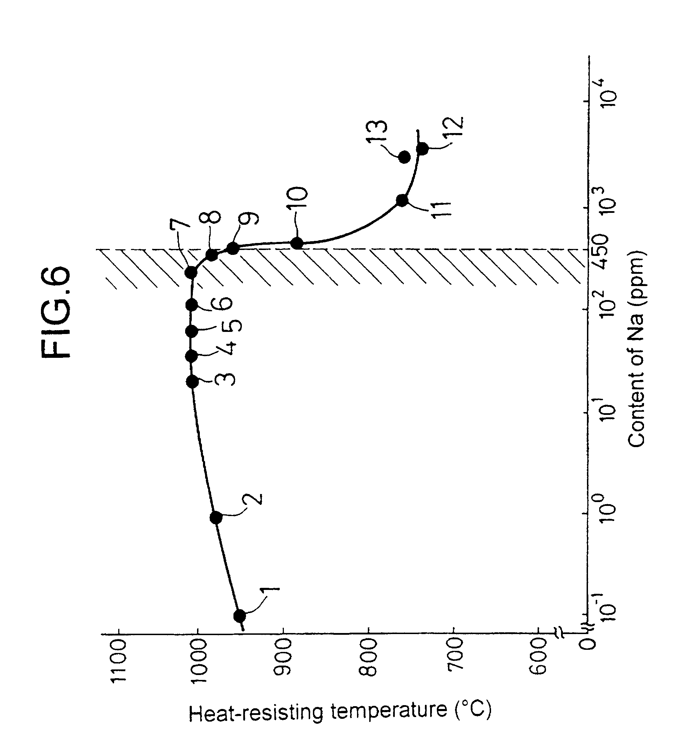

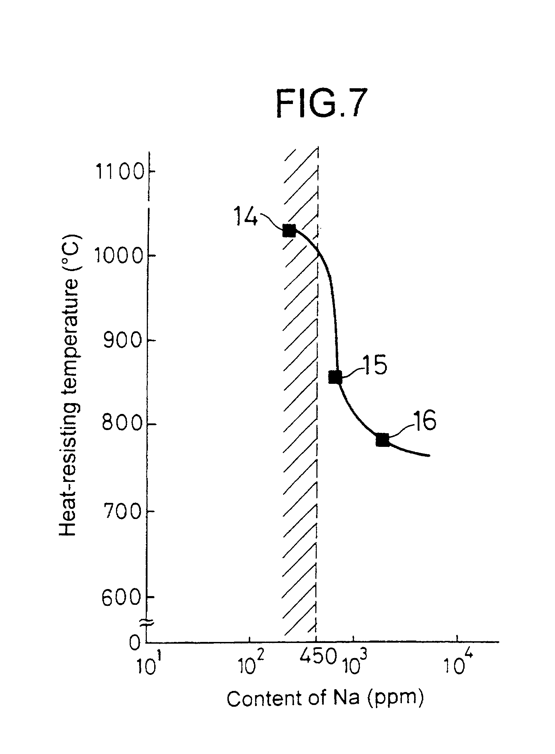

Fig.6 is a graph taken from Tables 6 and 7 to illustrate the relationship between the Na content and the heat-resisting temperature for the samples 1 to 10 of the highly active ZSM-5 zeolites and the samples 11 and 13 of the lowly active ZSM-5 zeolites. In Fig.6, dots 1 to 13 correspond to the samples 1 to 13, respectively. The relationship between the dots and the samples applies in following Figs.7 to 9.

As apparent from Fig.6, if the Na content C₁ is set at a value C₁ ≦ 450 ppm as in the samples 1 to 9 of the highly active ZSM-5 zeolites, the heat-resisting temperature can be increased considerably.

Table 8 show the Na content and the like of sample 14 of a highly active ZSM-5 zeolite having a molar ratio of SiO₂/Al₂O₃ > 100, the Na content and the like of a lowly active ZSM-5 zeolite used to produce the example 14, and the activating treatment for the lowly active ZSM-5 zeolite. Samples 15 and 16 of lowly active ZSM-5 zeolites which are untreated products are also given in Table 8. The columns of the activating treatment and the molar ratio of SiO₂/Al₂O₃ in Table 8 will be construed to be the same as those in Tables 6 and 7.

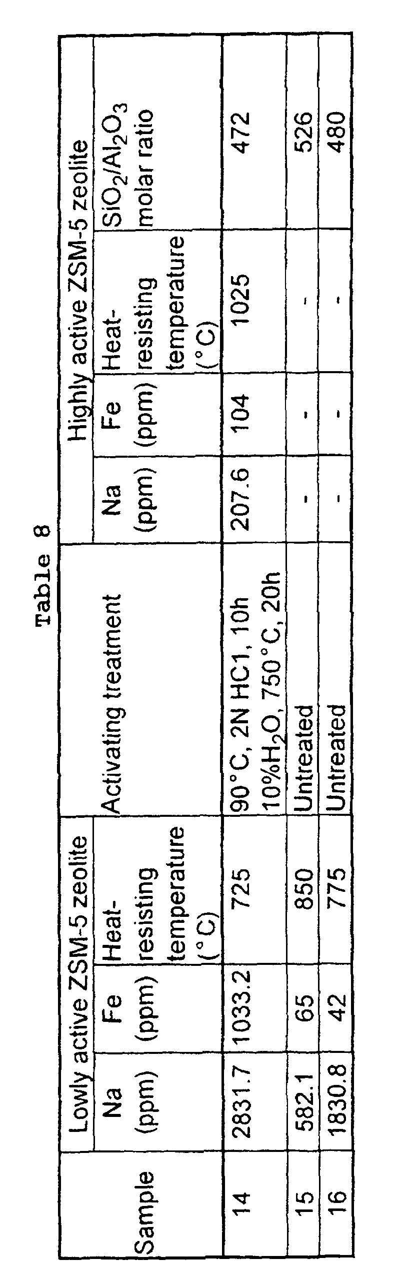

Fig.7 is a graph taken *from* Table 8 to illustrate the relationship between the Na content and the heat-resisting temperature for the sample 14 of the highly active ZSM-5 zeolite and the samples 15 and 16 of the lowly active ZSM-5 zeolites. It can be seen from Fig.7 that if the Na content C₁ is set at a value C₁ ≦ 450 ppm as in the sample 14 of the highly active ZSM-5 zeolite, the heat-resisting temperature thereof can be increased considerably.

Table 10 shows the Na content and the like of samples 25 to 28 of highly active ZSM-5 zeolites containing Na or K as an alkali metal, Ca or Mg as an alkaline earth metal Na and an impurity Fe, the Na content and the like of lowly active ZSM-5 zeolites used to produce these highly active ZSM-5 zeolites, and the activating treatment for the lowly active ZSM-5 zeolites.

The term "hydrated state, 600°C, 4 hr" in the column of the activating treatment of the sample 27 in Table 10 means that the temperature of an atmosphere around the lowly active ZSM-5 zeolite in the hydrated state was increased up to 600 °C, and the lowly active ZSM-5 zeolite is retained in the atmosphere having such an increased temperature for 4 hours. In addition, the columns of the activating treatment and the molar ratio of SiO₂/Al₂O₃ will be construed to be the same as in Tables 6 and 7.

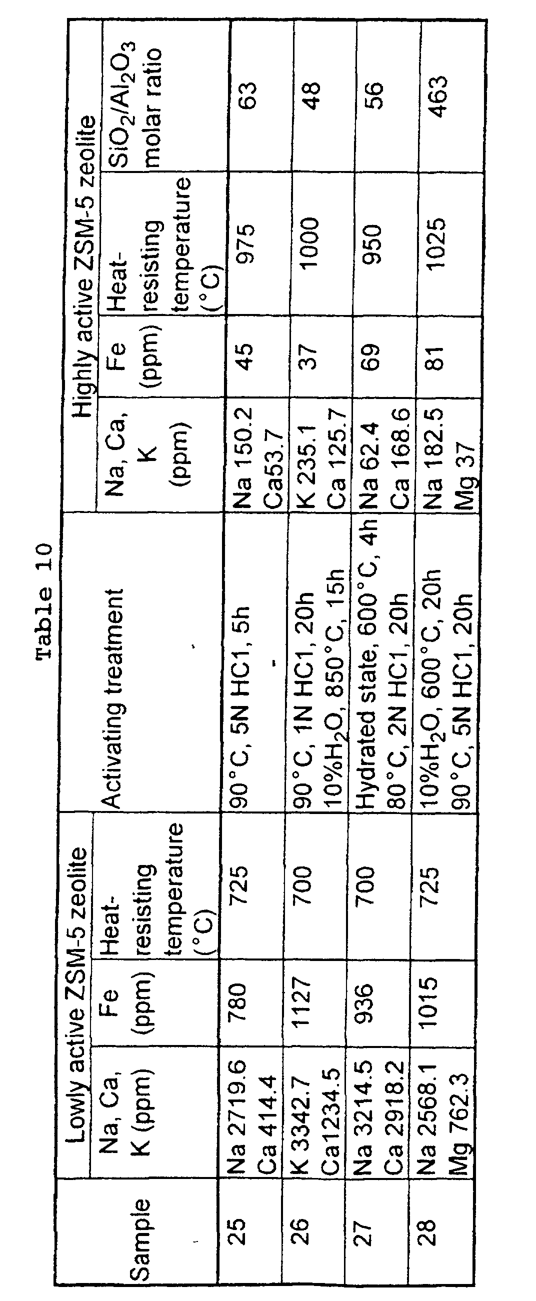

As apparent from Table 10, even if the highly ZSM-5 zeolite contains a combination of alkali and alkaline earth metals such as Na and Ca, K and Ca, and Na and Mg, if the total content C₁ of alkali and alkaline earth metals is equal to or less than 450 ppm (C₁ ≦ 450 ppm), the heat-resisting temperature can be increased considerably.

Table 11 indicates the content C₂ of the impurity Fe and Table 12 indicates the content C₂ of an impurities Cu, Ni or Cr, both for samples 29 to 38 of highly active ZSM-5 zeolites containing alkali metal Na. The columns of the activating treatment and the molar ratio of SiO₂/Al₂O₃ will be construed to be the same as in Table 10. Examples 32-34 and 38 do not represent modified ZSM-5 zeolites according to the invention.

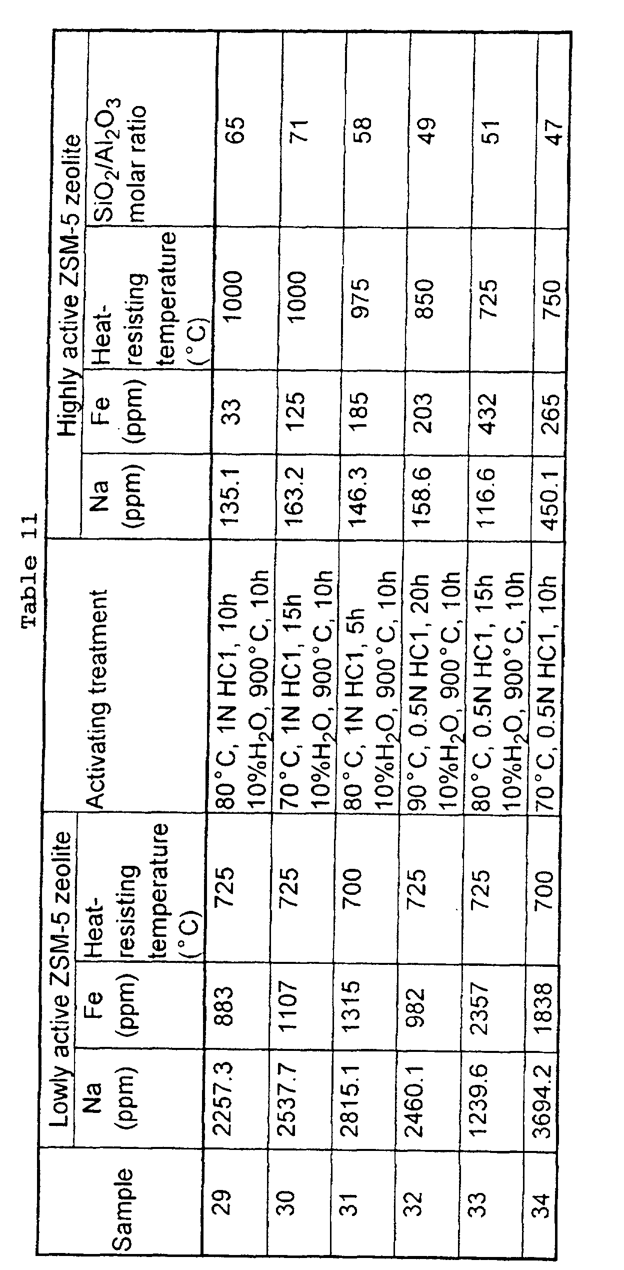

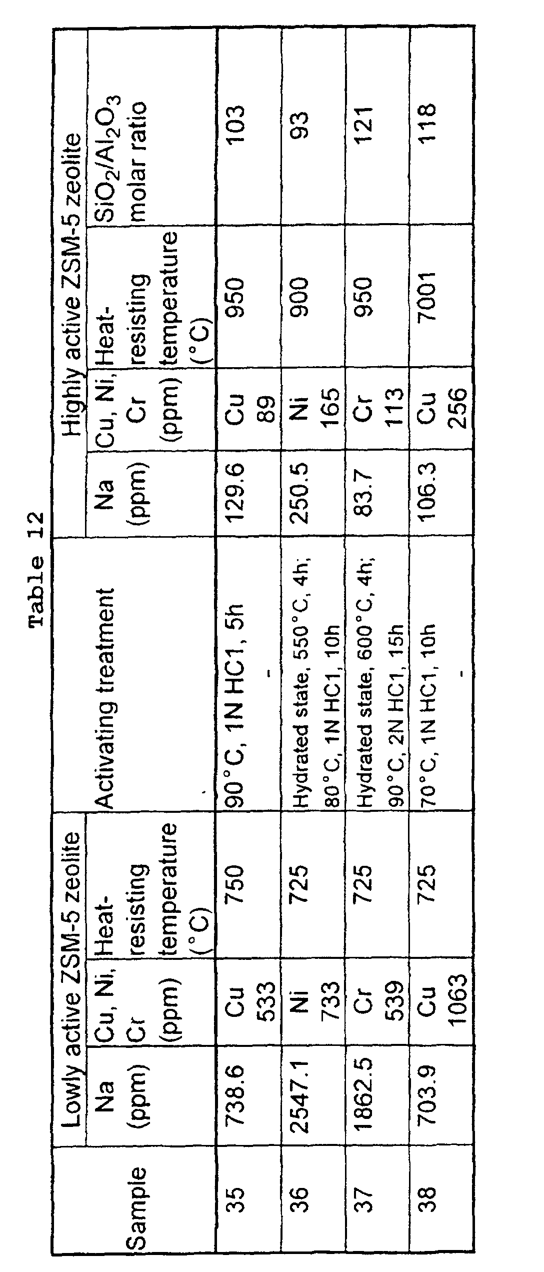

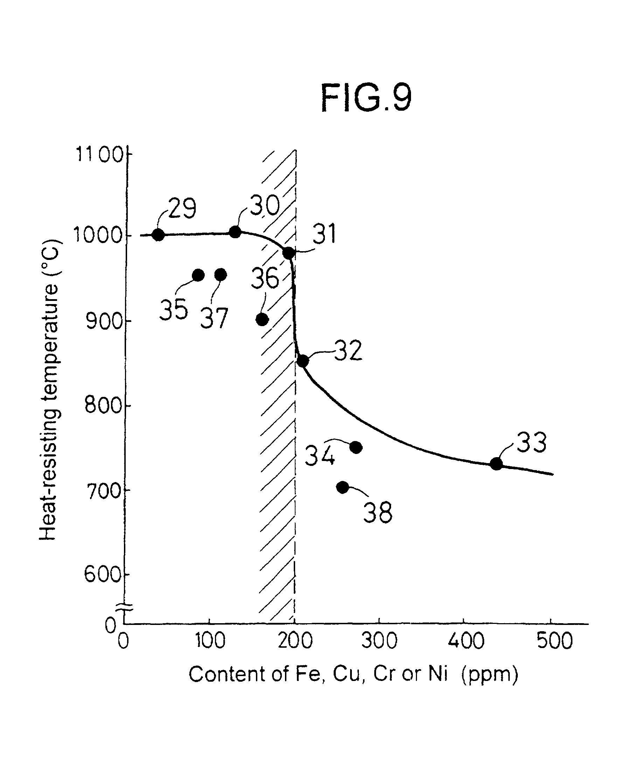

Fig.9 is a graph taken from Tables 11 and 12 to illustrate the relationship between the Fe content and the heat-resisting temperature for the samples 29 to 38 of the highly active ZSM-5 zeolites. It can be seen from Fig.9 that if the Fe content C₂ is set at a value C₂≦ 200 ppm as in the samples 29 to 31 of the highly active ZSM-5 zeolites, or if the content C₂ of Cu, Ni or Cr is set at a value C₂ ≦ 200 ppm as in the samples 35 to 37 of the highly active ZSM-5 zeolites, the heat-resisting temperature can be increased considerably.

### (Third Embodiment : catalyst compositions according to the invention)

### A. Highly active ZSM-5 zeolite

Table 13 shows crystal lattice constants a, b and c and single-lattice volumes V₁ and V₂ for respective examples 1 to 5 of lowly active ZSM-5 zeolites and highly active ZSM-5 zeolites produced therefrom. Table 14 shows the activating treatment for the examples 1 to 5 of the lowly active ZSM-5 zeolites, and Table 15 shows the alkali metal Na content C₁, the impurity Fe content C₂ and the heat-resisting temperature for the examples 1 to 5 of the lowly and highly active ZSM-5 zeolites, as well as the molar ratio of SiO₂/Al₂O₃ for the high active ZSM-5 zeolites.

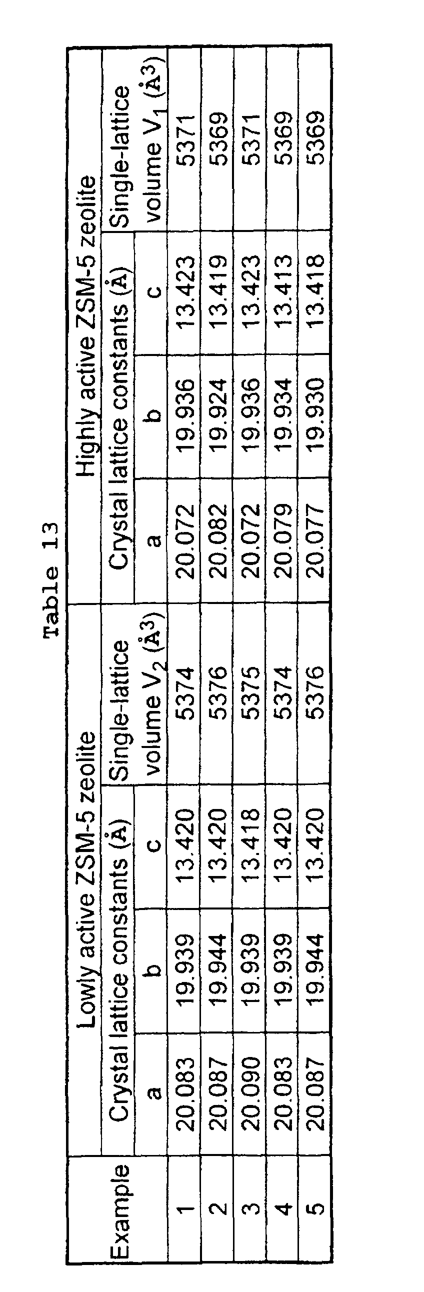

**Table 14**

| | Activating treatment | |
|---|---|---|
| Example | Type of treatment | Condition |
| 1 | Acid treatment | 90°C, 5N HC1, 20h |
| 2 | Acid treatment | 90°C, 5N HC1, 20h |
| 3 | Acid treatment | 90° C, 5N HC1, 20h |
| 4 | First run: Acid treatment | 90°C, 5N HC1, 20h |
| | Second run: Steam treatment | 10%H₂ O, 600°C, 20h |
| 5 | First run: acid treatment | 90°C, 5N HC1, 20h |
| | Second run: Steam treatment | 10%H₂ O, 600°C, 20h |
| | Third run: Acid treatment | 90°C, 5N HC1, 20h |

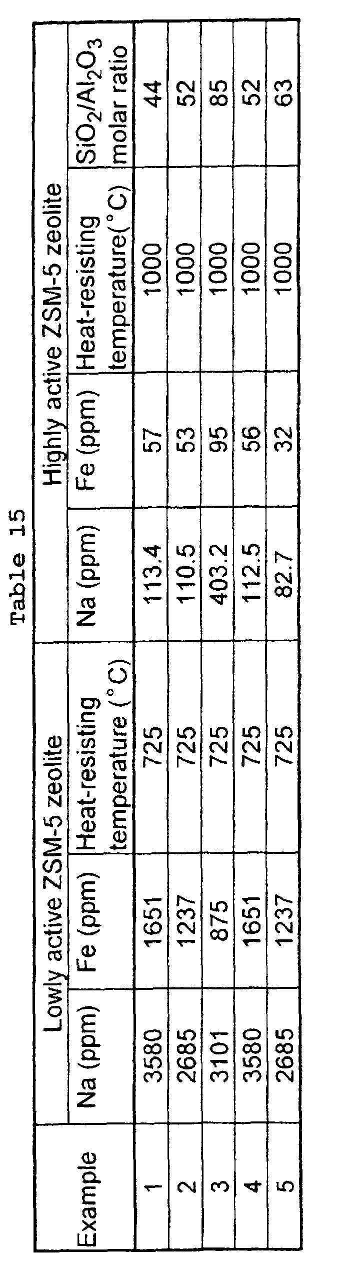

In the examples 1 to 5 of the lowly and highly active ZSM-5 zeolites, a relation β > α is established between Si-O-Si bond angles α and β as in the example 1 in the first embodiment, and a relation V₁ < V₂ is established between both the single-lattice volumes V₁ and V₂. The removed element E is Al.

The measurement of the heat-resisting temperature for the examples 1 to 5 of the lowly and highly active ZSM-5 zeolites was carried out in the same manner as in the first embodiment. The result showed that the heat-resisting temperature measured in the above-described manner for the examples 1 to 5 of the highly active ZSM-5 zeolites was 1,000°C, while the heat-resisting temperature measured in the same manner for the examples 1 to 5 (wherein the examples 1 and 4 are the same, and the examples 2 and 5 are the same) of the lowly active ZSM-5 zeolites was 725 °C, and thus, an increment of 275 °C was observed.

### B. Exhaust emission control catalyst

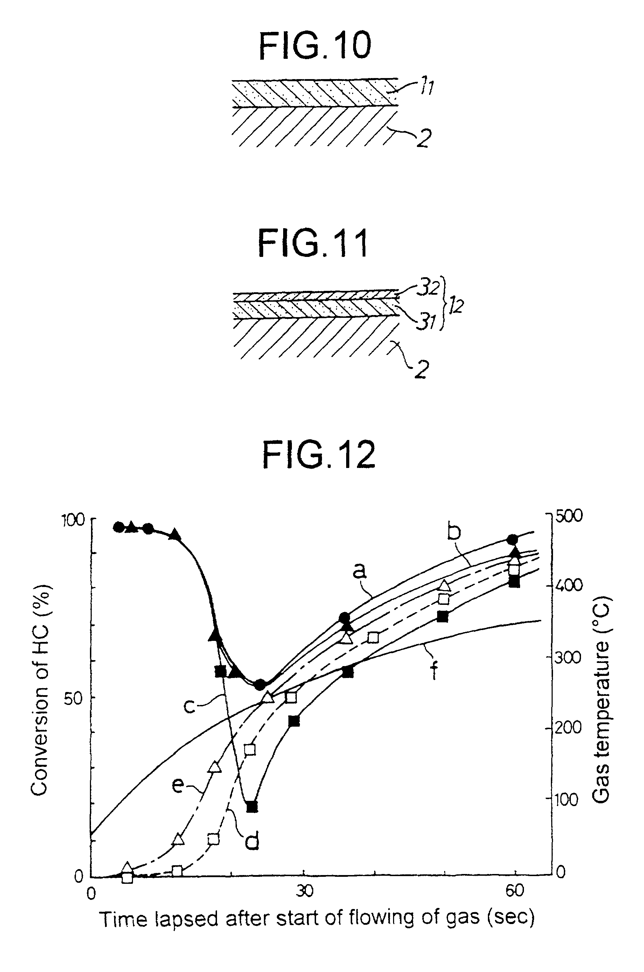

A catalyst 1₁ shown in Fig.10 and having a single-layer structure is comprised of a fine granular highly active ZSM-5 zeolite containing a fine granular catalytic element which is a material to be mixed. The catalyst 1₁ is carried in a honeycomb 2.

The catalytic element is comprised of a fine granular ceramics carrier, and at least one of a catalytic metal and a catalytic metal oxide carried in the carrier. Fine granules such as chemically active *γ*-Al₂O₃, ZrO₂, TiO₂, SiO₂, MgO, CeO₂, etc, may be used as the ceramics carrier. The metal for the catalytic metal and metal oxide is at least one metal selected from at least one group of Groups Ib and VIIa of Periodic Table, an iron group and a platinum group. Cu, Ag and Au are included in the Group Ib of Periodic Table. Mn, Te and Re are included in the Group VIIa of Periodic Table. Fe, Co and Ni are included in the iron group. Ru, Rh, Pd, Os, Ir and Pt are included in the platinum group. Co-catalyst such as Ce, Ba, La, Y, Nd, Sm, Gd, Nb, Zr, Ni and Fe and oxides thereof may also be used in combination with the catalyst if necessary.

In producing a catalyst 1₁, a ceramic carrier is first placed in a solution containing, for example, a catalytic metal dissolved therein, and the catalytic metal is carried in the surface of the carrier to produce a catalytic element. Then, a highly active ZSM-5 zeolite and the catalytic element are mixed together to prepare a slurry mixture. A honeycomb 2 is immersed into the slurry mixture and then pulled it up therefrom. Thereafter, the slurry mixture deposited to the honeycomb 2 is dried to provide a catalyst 1₁.

A catalyst 1₂ shown in Fig.11 and having a two-layer structure is comprised of a highly active ZSM-5 zeolite (a lower layer 3₁) including a catalytic element which is similar to that described above and which is a material to be laminated on an upper layer 3₂. The catalyst 1₂ is carried in a honeycomb 2.

In producing such a catalyst 1₂, a slurry containing a highly active ZSM-5 zeolite is first prepared. A honey comb 2 is immersed into the slurry and pulled it up therefrom. Thereafter, the slurry deposited to the honeycomb 2 is dried to form a lower layer 3₁. Then, a honeycomb 2 is immersed into a slurry containing a catalytic element which is similar to that described above and pulled it up therefrom. Thereafter, the slurry deposited to the lower layer 3₁ is dried to form an upper layer 3₂.

The particle size of the catalytic element in each of the catalyst 1₁ and 1₂ is in a range of 0.05 µm (inclusive) to 50 µm (inclusive). If the particle size is less than 0.05 µm. flowability of exhaust gas is degraded. because the particle size of the catalytic element is too small. On the other hand, the particle size exceeding 50µ m means that the particle size of the carrier is increased. Therefore, the specific surface area of the carrier is reduced to decrease the amount of catalytic metal carried, resulting in a lowered catalytic activity. Preferably, the particle size of the catalytic element is in a range of 0.1µm (inclusive) to 25 µm (inclusive).

### (I) Hydrocarbon (HC) converting catalyst made using highly active ZSM-5 zeolite

Table 16 shows the constitution of each of samples 1 and 2 and comparative samples 1 to 6. In Table 16, the term "zeolite" means a highly active ZSM-5 zeolite, unless stated otherwise and the term "lowly active" means a lowly active ZSM-5 zeolite. CeO, BaO or ZrO₂ was used as a co-catalyst. A honeycomb having a cylindrical shape with a diameter of 25 mm and a length of 60 mm and including 300 cells/in² was used for carrying a catalyst of each of the samples 1 and 2 and the comparative samples land 3 to 6.

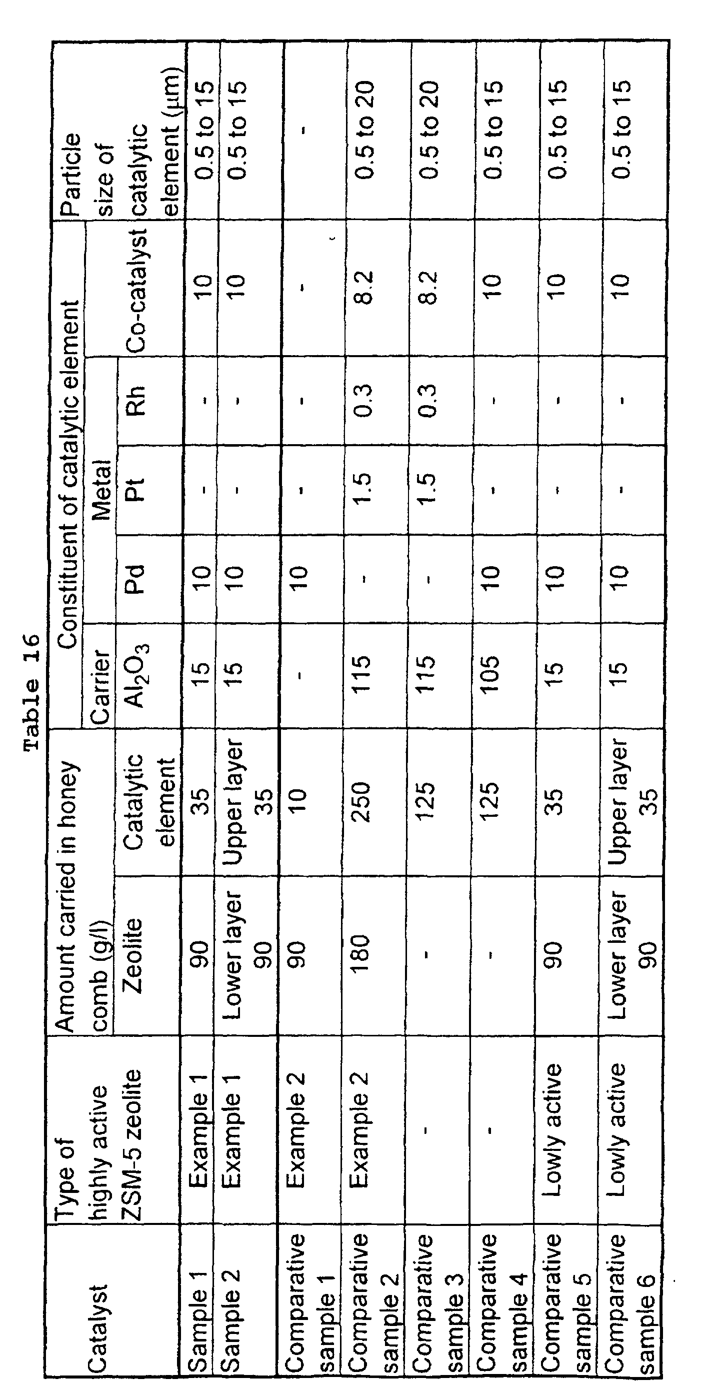

The catalyst of the sample 1 is formed into a single-layer structure from a mixture of a highly active ZSM-5 zeolite and a catalytic element. The catalyst of the sample 2 is formed into a two-layer structure consisting of a lower layer made of highly active ZSM-5 zeolite and an upper layer made of catalytic element. The catalyst of the comparative sample 1 is formed by allowing a catalytic metal to be carried in a highly active ZSM-5 zeolite by an ion exchange process. The catalyst of each of the comparative samples 3 and 4 is formed from only catalytic element. Further, the catalyst of the comparative sample 5 is formed into a single-layer structure from a mixture of a lowly active ZSM-5 zeolite and a catalytic element. Yet further, the catalyst of the comparative sample 6 is formed into a two-layer structure consisting of a lower layer made of a lowly active ZSM-5 zeolite and an upper layer made of the catalytic element.

The catalyst of the comparative sample 2 is formed from a highly active ZSM-5 zeolite carried in a first honeycomb and a catalyst element carried in a second honeycomb. The first honeycomb is disposed in an upstream location in an exhaust system, and the second honeycomb is disposed in a downstream location. The distance between both the honeycombs was set at 5 mm. These honeycombs have the same structure as described above, except that their length is 30 mm.

In order to examine the initial performance of the catalysts of the sample 1 and the comparative samples 1 to 4, a following hydrocarbon conversion test was carried out to measure a hydrocarbon conversion by each of the catalysts, and the results shown in Fig.12 were obtained.

In the test, a test gas having a composition consisting of 0.5 % by volume of oxygen (O₂), 400 ppm of hydrocarbon (C₃H₆), 500 ppm of nitrogen monoxide (NO), 5,000 ppm of carbon monoxide (CO), 14 % by volume of carbon dioxide (CO₂), 1,700 ppm of hydrogen (H₂), 10 % by volume of water (H₂O) and the balance of nitrogen (N₂) was used. And the test was carried out by allowing the test gas to flow through each of the honeycombs (the first and second honeycombs in the comparative sample 2) at a space velocity (S.V.) of 20,000 hr⁻¹, and by rising the temperature of the test gas up to 50 to 350 °C at a rate of 3 to 15 °C/sec, while measuring the conversion of hydrocarbon during this time.

In Fig.12, a line a corresponds to the catalyst of the sample 1, and lines b to e correspond to the catalyst of the comparative samples 1 to 4. A line f indicates a gas temperature. It can be seen from Fig.12 that each of the catalysts of the sample 1 indicated by the line a and of the comparative sample 1 indicated by the line b has a high conversion of hydrocarbon over from a low range to a high range of the gas temperature. This is attributable to the fact that the highly active ZSM-5 zeolite exhibits a function of adsorbing a hydrocarbon of low temperature at a high collection efficiency in the low range of the gas temperature, and the fact that the catalytic element exhibits a higher hydrocarbon converting capability in the high range of the gas temperature.

In a case of the catalyst of the comparative sample 2 indicated by the line c, the conversion of hydrocarbon is higher in the low range of the gas temperature, but lower in the high range of the gas temperature, because the rising of the temperature of the catalytic element carried in the second honeycomb is obstructed by the first honeycomb. The catalyst of each of the comparative samples 3 and 4 indicated by the lines d and e has no hydrocarbon adsorbing capability in the low range of the gas temperature. Therefore, a hydrocarbon conversion is low.

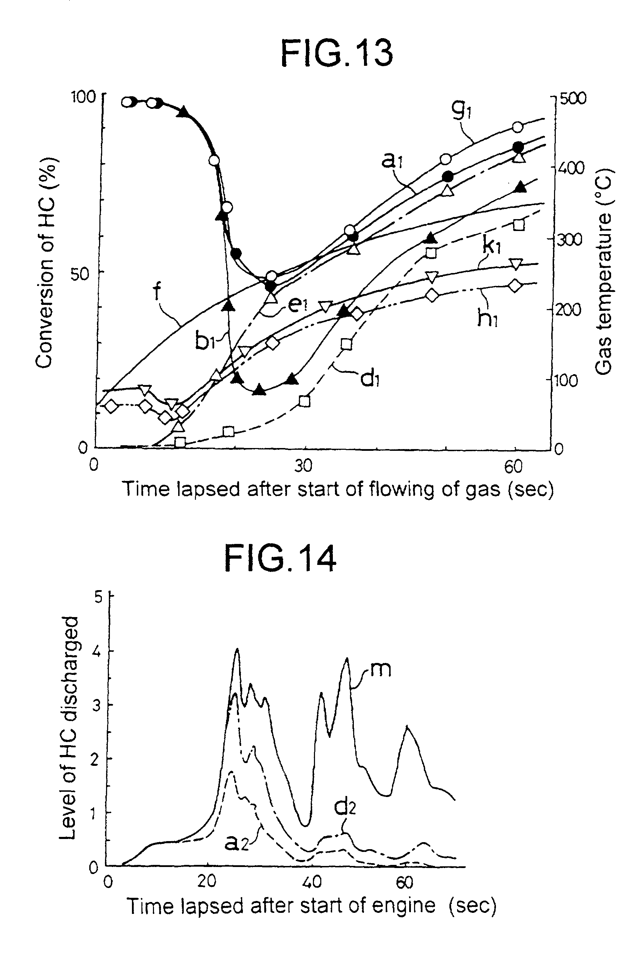

Then, the catalyst of each of the samples 1 and 2 and the comparative samples 1 and 3 to 6 was disposed in an exhaust system of an engine and retained at a high temperature of 900 °C for 20 hours. Thereafter, in order to examine the performance after a durability test for each of the catalysts, a hydrocarbon conversion test similar to that described above was carried out to measure a conversion of hydrocarbon provided by each of the catalysts, thereby providing results shown in Fig.13.

The relationship between each of lines and each of the catalysts in Fig.13 is as given in Table 17 below. The line f likewise indicates a gas temperature.

**Table 17**

| Line | Catalyst |
|---|---|
| a₁ | Sample 1 |
| g₁ | Sample 2 |
| b₁ | Comparative sample 1 |
| d₁ | Comparative sample 3 |
| e₁ | Comparative sample 4 |
| h₁ | Comparative sample 5 |
| k₁ | Comparative sample 6 |

It can be seen from Fig.13 that the samples 1 and 2 indicated by lines a₁ and g₁ exhibits a high conversion of hydrocarbon after the durability test, as compared with the catalysts of the comparative samples 1, and 3 to 6 indicated by lines b₁, e₁, d₁, h₁ and k₁. The reason is that the catalysts have a high-temperature durability, because the highly active ZSM-5 zeolites in the samples 1 and 2 have an excellent heat resistance. Particularly, the catalyst having the two-layer structure in the sample 2 indicated by the line g₁ has a catalytic activity higher than that of the catalyst having the single-layer structure in the sample 1 indicated by the line a₁.

In a case of the catalyst of the comparative sample 1 indicated by the line b₁, the highly active ZSM-5 zeolite exhibited a heat resistance in the durability test, and hence, the catalyst obtained the hydrocarbon adsorbing capability of the highly active ZSM-5 zeolite in the low range of the gas temperature to exhibit a higher conversion of hydrocarbon, but provides a lower conversion of hydrocarbon in the high range of the gas temperature due to the fact that the sintering of palladium (Pd) as a catalytic metal occurred in the durability test. In a case of the catalyst of the comparative sample 3 indicated by the line d₁. the conversion of hydrocarbon was reduced considerably as compared with that before the durability test, because the amount of Pt or Rh carried as a catalytic metal was originally small and moreover, the catalyst was thermally deteriorated by the durability test. In a case of the catalyst of the comparative sample 4 indicated by the line e₁, the reduction in conversion of hydrocarbon was small, because of a relative small degree of thermal deterioration by the durability teat. In a case of the catalysts of the comparative samples 5 and 6 indicated by the lines h₁ and k₁, a conversion of hydrocarbon was low, because the lowly active ZSM-5 zeolite was thermally deteriorated by the durability test.

Fig.14 illustrates the relationship between the time lapsed after the start of an engine (with a displacement of 2,000 cc) in a FTP LA-4 mode and the level of hydrocarbons discharged. In Fig.14, each of lines m, a₂ and d₂ indicates a variation in level of hydrocarbon component discharged from the engine, when no catalyst was used, when the catalyst of the sample 1 after the durability test was used, and when the catalyst of the comparative sample 3 after durability test was used, respectively.

As apparent from Fig.14, if the catalyst of the sample 1 is used as indicated by the line a₂, the level of hydrocarbon discharged can be reduced by 50 % or more, as compared with the use of the catalyst of the comparative sample 3 indicated by the line d₂.

### (II) Nitrogen oxide converting catalyst made using highly active ZSM-5 zeolite

Table 18 shows the constitution of catalysts of samples 3 to 7 and comparative samples 7 and 8. In Table 18, the term "zeolite" means a highly active ZSM-5 zeolite, unless stated otherwise and the term " lowly active" means a lowly active ZSM-5 zeolite. A honeycomb having a cylindrical shape with a diameter of 25 mm and a length of 60 mm and including 300 cells/in² was likewise used for carrying each of the catalysts.

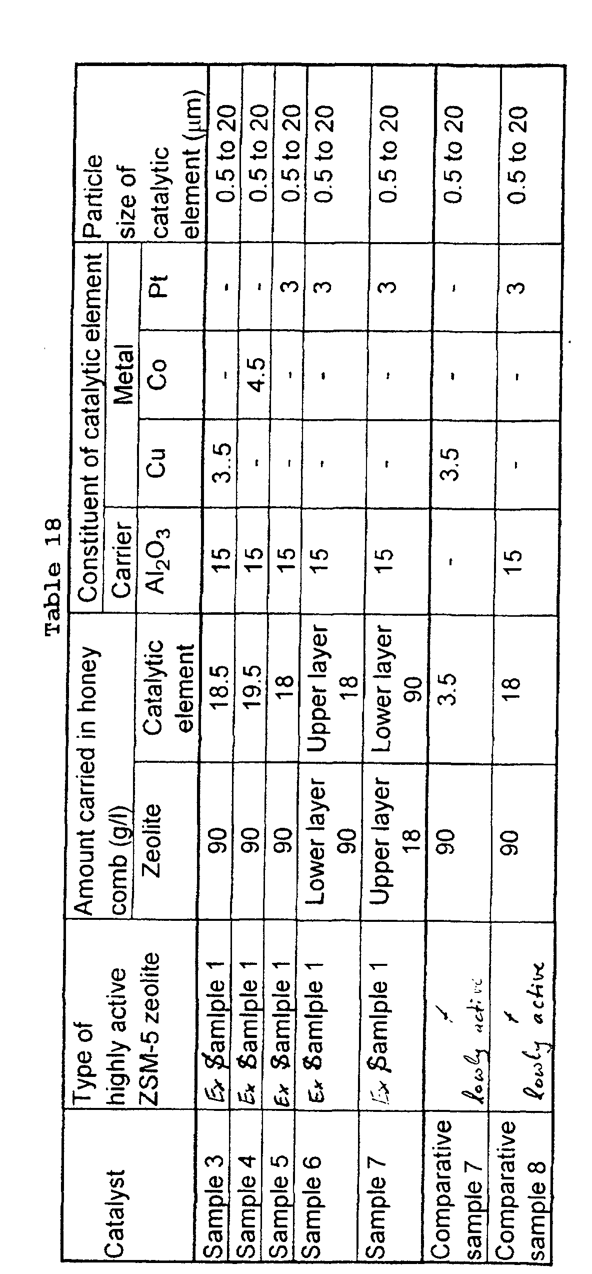

The catalyst of each of the samples 3 to 5 is formed into a single-layer structure from a mixture of a highly active ZSM-5 zeolite and a catalytic element, and the catalyst of the sample 6 is formed into a two-layer structure consisting of a lower layer made of a highly active ZSM-5 zeolite and an upper layer made of a catalytic element. Further, the catalyst of the sample 7 is formed into a two-layer structure consisting of a lower layer made of a catalytic element and an upper layer made of a highly active ZSM-5 zeolite.

The catalyst of the comparative sample 7 is formed with a catalytic element carried in a lowly active ZSM-5 zeolite by an ion exchange process, and the catalyst of the comparative sample 8 is formed into a single-layer structure from a mixture of a lowly active ZSM-5 zeolite and a catalytic element.

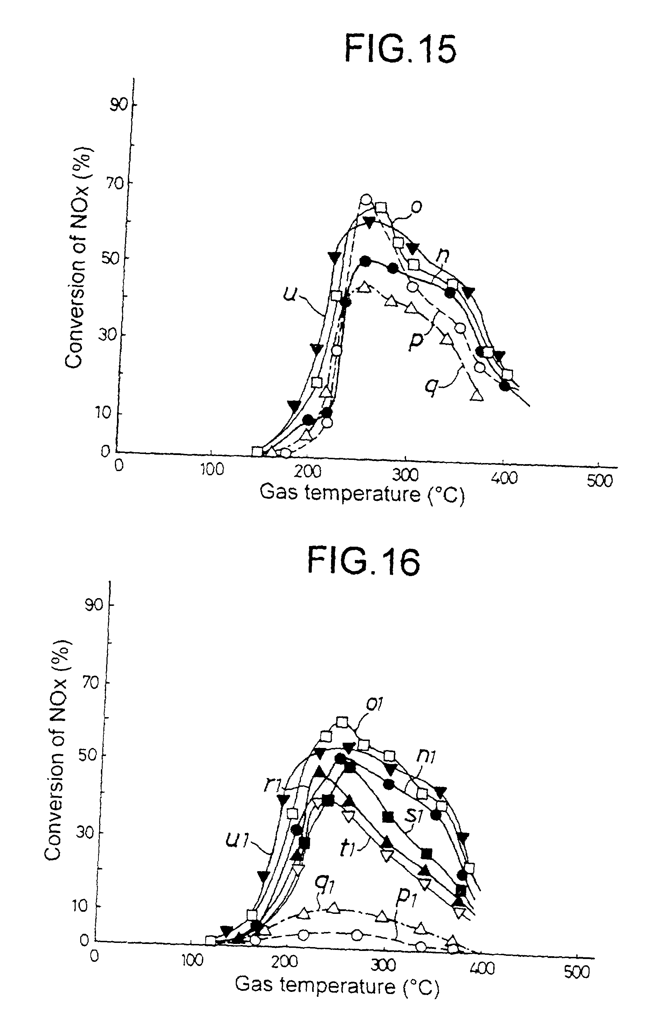

In order to examine the initial performance of the catalysts of the samples 5 to 7 and the comparative samples 7 and 8, a nitrogen oxide conversion test was carried out for these catalyst on the assumption of a combustion of a following lean air-fuel mixture to examine the relationship between the gas temperature and the conversion of nitrogen oxide (NO_{X}) for these catalysts, thereby providing results shown in Fig.15.

In the test, a test gas having a composition consisting of 10 % by volume of oxygen (O₂), 800 ppm of hydrocarbon (C₃H₆), 800 ppm of nitrogen monoxide (NO), 0.1 % by volume of carbon monoxide (CO), 10 % by volume of carbon dioxide (CO₂), 500 ppm of hydrogen (H₂), 10 % by volume of water (H₂O) and the balance of nitrogen (N₂) was used. And the test was carried out by allowing the test gas to flow through each of honeycombs at a space velocity (S.V.) of 20,000 hr⁻¹ and rising the temperature of the test gas from 25°C to 400 °C at a temperature rising rate of 10 to 40 °C /min, while measuring the conversion of nitrogen oxide (NO_{X}) during this time.

In Fig.15, lines n, o and u correspond to the samples 5, 6 and 7, respectively, and lines p and q correspond to the comparative samples 7 and 8, respectively. As apparent from Fig.15, each of the catalysts has a relatively good initial performance.

Then, each of the catalysts of the samples 3 to 7 and the comparative samples 7 and 8 was disposed in an exhaust system of an engine and retained at a high temperature of 700 °C for 20 hours. Thereafter, in order to examine the performance after a durability test for each catalyst, a nitrogen oxide conversion test similar to that described above was carried out to examine a conversion of nitrogen oxide (NO_{X}) exhibited by each catalyst, thereby providing results shown in Fig.16.

The relationship between each of lines and each of the catalysts in Fig.16 is as given in Table 19 below.

**Table 19**

| Line | Catalyst |
|---|---|
| r₁ | Sample 3 |
| s₁ | Sample 4 |
| n₁ | Sample 5 |
| o₁ | Sample 6 |
| u₁ | Sample 7 |
| p₁ | Comparative sample 7 |
| q₁ | Comparative sample 8 |

As apparent from Fig.16, the catalyst of each of the samples 3 to 7 indicated by the line r₁, s₂, n₁, o₁ and u₁ exhibits a high conversion of nitrogen oxide (NO_{X}) after the durability test, as compared with the catalyst of the comparative samples 7 and 8 indicated by the lines p₁ and q₁. The reason is that the catalysts have an excellent high-temperature durability, because the highly active ZSM-5 zeolites in the samples 1 and 2 have a good heat resistance. In addition, the catalyst having the two-layer structure in each the samples 6 and 7 indicated by the line o₁ and u₁ likewise has a catalytic activity higher than that of the catalyst having the single-layer structure of the sample 3 indicated by the line r₁ or the like. In this case, the the catalysts of the samples 6 and 7 have the substantially same activity.

### (Fourth Embodiment (illustrative): modified ZSM-5 zeolite component according to the invention)

A highly active ZSM-5 zeolite having a high hydrocarbon adsorbing capability is produced through two steps, an intermediate step and a final step.

The molar ratio Mr of SiO₂/Al₂O₃ of a lower active ZSM-5 zeolite used at the intermediate step influences the hydrocarbon adsorbing capability of the highly active ZSM-5 zeolite produced through the final step. If a lower active ZSM-5 zeolite having a molar ratio Mr of SiO₂/Al₂O₃ ≧ 100 is used, a highly active ZSM-5 zeolite produced has a high hydrocarbon adsorbing capability, as compared with the use of a lower active ZSM-5 zeolite having a molar ratio Mr < 100.

In an acid treatment at the intermediate step, an acid solution such as 1 to 10 N hydrochloric acid (HCl) solution is used. The lowly active ZSM-5 zeolite is subjected to a stirring and refluxing treatment in such an acid solution. In this treatment, the temperature T₁ of the acid solution is set in a range represented by 70°C ≦ T₁ ≦ 90°C, and the treatment time t₁ is set in a range represented by t₁ ≧ 1 hour. This provides a heat-resistant intermediate product having a heat resistance higher than that of the lowly active ZSM-5 zeolite.

At the final step, a steam treatment and/or a boiled-water treatment may be utilized as a heating treatment in the presence of water.

The steam treatment is carried out by retaining the heat-resistant intermediate product in a high temperature atmosphere containing water, i.e., about 10 % by volume of steam. In this treatment, the treatment temperature T₂ is set in a range of 750°C to 900°C, and the treatment time t₂ is set in a range of 10 to 20 hours.

The boiled-water treatment is carried out by subjecting the heat-resistant intermediate product to a hydrating treatment and retaining a resulting intermediate product in a hydrated state at a high temperature. In this treatment, the treatment temperature T₂ is set in a range of 550°C to 600°C, and the treatment time t₂ is set at 4 hours.

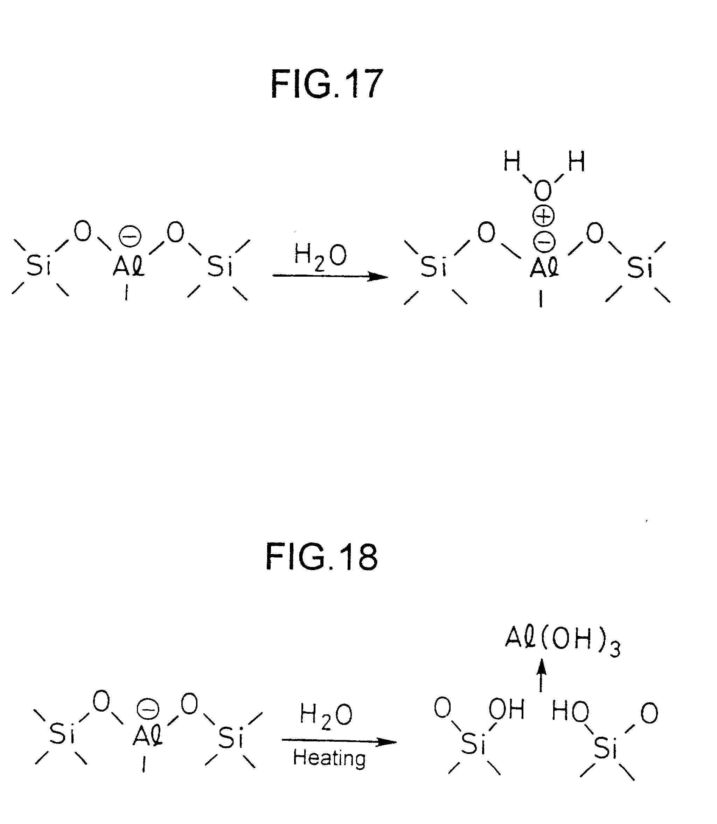

A de-aluminization occurs in the intermediate product at the intermediate step, but the degree thereof is relatively low and hence, the intermediate product has a high hydrophilic nature. More specifically, valence of aluminum (Al) in the intermediate product is smaller than that of silicon (Si), as shown in Fig.17, and therefore, the aluminum in the intermediate product is in a poor-electron state, as compared with the silicon, and oxygen atom in (H₂O) molecule, which is significantly polarized and in a rich-electron state, is easy to bond to such aluminum. If H₂O is adsorbed in this manner, the hydrocarbon adsorbing capability of the intermediate product is significantly reduced.

When the intermediate product is subjected to the steam treatment or the like, Al is reacted with H₂O to produce Al(OH)₃ and thus, Al is eliminated from the intermediate product. This produces a highly active ZSM-5 zeolite. The electron state in this highly active ZSM-5 zeolite is substantially uniformized and therefore, the highly active ZSM-5 zeolite has a high hydrophobic nature and thus exhibits an excellent hydrocarbon adsorbing capability, while avoiding the adsorption of H₂O.

### A. Acid treatment (intermediate step)

(a) A lowly active ZSM-5 zeolite having a molar ratio of SiO₂/Al₂O₃ of 36 was placed in a separable flask (of a volume of 20 liters) containing 10 liters of 5 N HCl solution charged therein. Then, a condenser was attached to the separable flask, and the stirring and refluxing treatment was carried out at 90 °C for 24 hours.
(b) Solids were filtered off in a suction manner and washed with 12 liters of pure water.
(c) The solids were subjected to a drying treatment at 110 °C for 2 hours and then to a calcination treatment at 400 °C for 2 hours.

This produced a heat-resistant intermediate product having a molar ratio of SiO₂/Al₂O₃ of 48, which will be called an sample 1 hereinafter.

Using two lowly active ZSM-5 zeolites having different molar ratios of SiO₂/Al₂O₃, the operations (a) to (c) were carried out to provide two heat-resistant intermediate products, which will be called examples 2 and 3 hereinafter.

Table 20 shows the molar ratio of SiO₂/Al₂O₃ and the heat-resisting temperature for the lowly active ZSM-5 zeolites and the examples 1 to 3 of the intermediate products.

The measurement of the heat-resisting temperature was carried out in a following manner: the lowly active ZSM-5 zeolites and the intermediate products were subjected to a thermal deterioration test at heating temperatures of 600, 700, 800, 900, 1,000 and 1.100 °C for 18 hours in each case in the atmosphere and then to a poder X-ray diffraction using a Cu-Kα ray to observe the state of crystal destructed due to a heat. The maximum heating temperature at the time when the X-ray reflection intension was not varied even after the test, was defined as a heat-resisting temperature.

**Table 20**

| | Lowly active ZSM-5 zeolite | | | |
|---|---|---|---|---|
| | SiO₂/Al₂O₃ Molar ratio | Heat-resisting temperature (°C) | SiO₂/Al₂O₃ Molar ratio | Heat-resisting temperature (°C) |
| Example 1 | 36 | 700 | 48 | 1000 |
| Example 2 | 76 | 700 | 88 | 1000 |
| Example 3 | 440 | 700 | 526 | 1100 |

As apparent from Table 20, the examples 1 to 3 of the intermediate products has an excellent heat-resistance.

### B. Steam treatment (final step)

This steam treatment is carried out with each of the examples 1 to 3 of the intermediate products carried in a honeycomb. Therefore, a carrying process will be first described.
(a) 400 g Of the example 1, 200 g of silica sol and 580 g of pure water were mixed together for 24 hours in a ball mill with alumina balls therein to prepare a slurry.
(b) A honeycomb (300 cells and 0.5 mil) having a diameter of 2.54 cm (1 inch) and a length of 60 mm was immersed into the slurry for 30 seconds, and then, an excess of the slurry was blown off from the honeycomb by an air gun.
(c) The honeycomb with slurry carried therein was air-dried for 12 hours and then calcined using a Muffle furnace at 100, 200, 300 and 600 °C for one hours in each case.
(d) Both the operations (b) and (c) were repeated two times to provide a honeycomb with 5 g of the example carried therein.

Two honeycombs with 5 g of the examples 2 and 3 were produced in the same manner.

In the steam treatment, each of the honeycombs was retained at a temperature of 900°C for 20 hours in an atmosphere of flow of an atmospheric gas consisting of 10 % by volume of water (H₂O), 1 % by volume of oxygen (O₂) and the balance of nitrogen (N₂). This provided three hydrocarbon converting member including examples 1a to 3a of highly active ZSM-5 zeolites corresponding to the examples 1 to 3 of the heat-resistant intermediate products. In this case, the amount of highly active ZSM-5 zeolite carried in each honeycomb is substantially equal to that of the heat-resistant intermediate product.

Various hydrocarbon converting members including different amounts of highly active ZSM-5 zeolites produced by subjecting the examples 1 to 3 of the intermediate products to the steam treatment were produced in the same manner. For comparison, each of the examples 1 to 3 of the intermediate products was used as a hydrocarbon adsorbent and carried in a honeycomb in the same manner to produce various hydrocarbon converting members including the examples 1 to 3 carried in different amounts.

For the purpose of carrying out a hydrocarbon adsorbing test, a gas consisting of 10 % by volume of water (H₂O), 400 ppm of propylene gas (C₃H₆). 0.5 % by volume of carbon monoxide (CO), 500 ppm of nitrogen monoxide (NO), 0.17 % by volume of hydrogen (H₂), 14 % by volume of carbon dioxide (CO₂), 0.5 % by volume of oxygen (O₂) and the balance of nitrogen (N₂) was prepared.

The hydrocarbon adsorbing test was carried out by allowing the test gas having a temperature of 45 to 55 °C to flow through each of the hydrocarbon converting members at a flow rate of 25,000 ml/min for 60 seconds, while measuring the adsorption of hydrocarbon.

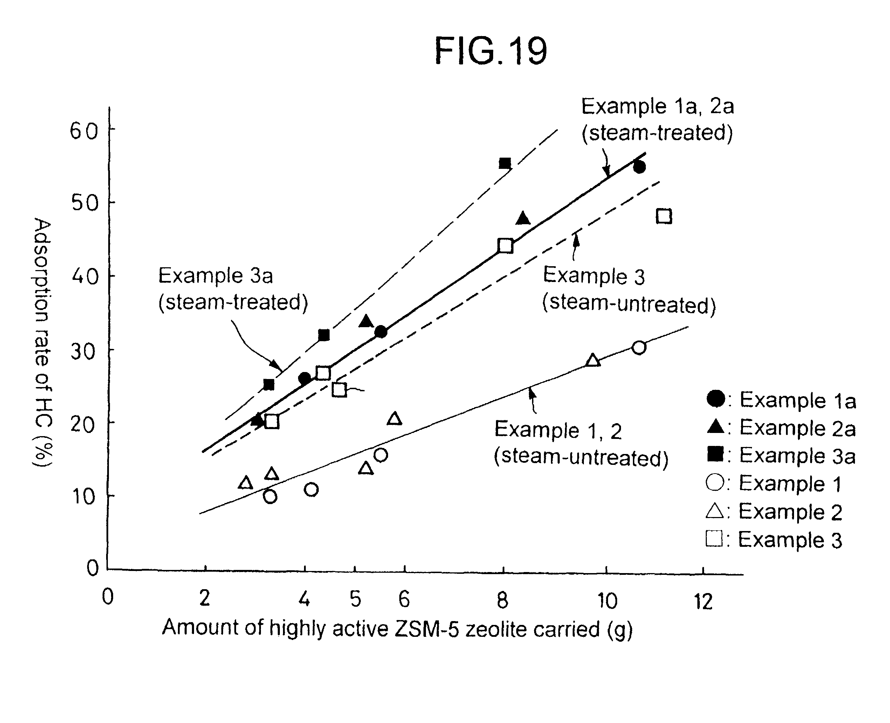

Fig.19 shows results of the hydrocarbon adsorbing test. It can be seen from Fig.19 that the adsorption of hydrocarbon can be increased considerably as in the examples 1a to 3a by the steam treatment.

If the examples 1a and 2a were compared with the example 3a, the adsorption of hydrocarbon exhibited by the example 3a with a molar ratio Mr of SiO₂/Al₂O₃ ≧ 100 before the acid treatment is higher than those exhibited by the examples 1a and 2a. However, in the examples 1, 1a and 2, 2a each having a smaller molar ratio Mr of SiO₂/Al₂O₃ after the acid treatment, the degree of increase in adsorption of hydrocarbon provided by the steam treatment is high when the amount of highly active ZSM-5 zeolite carried is 5 g, as compared with the examples 3 and 3a. The degree of increase in adsorption of hydrocarbon is about 1.8 times in the examples 1 and 1a and the examples 2 and 2a and about 1.2 times in the example 3.

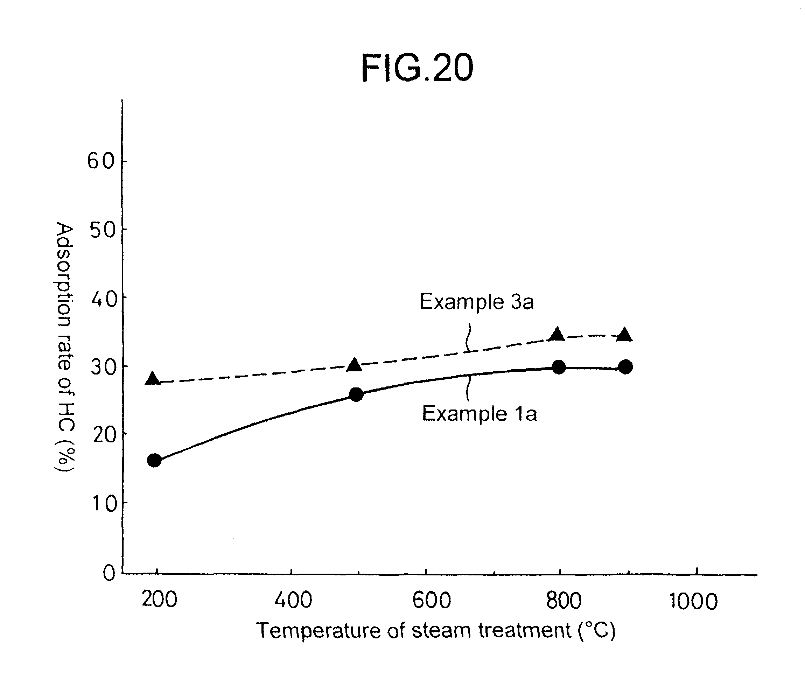

Fig.20 illustrates the relationship between the temperature of the steam treatment and the adsorption of hydrocarbon for the examples 1a and 3a. In this case, the retension time in the steam treatment was set at 3 hours.

It can be seen from Fig.20 that the adsorption of hydrocarbon is increased with an increase in temperature, and the hydrocarbon adsorbing capability of the example 3a is higher than that of the example 1a.

## Claims

1. A catalyst composition for the conversion of exhaust gas emitted from an internal combustion engine, consisting of
a) a modified ZSM-5 zeolite and
b) a catalytic element, which is comprised of a ceramic carrier and at least one of a catalytic metal and a catalytic metal oxide carried in or on said carrier, said catalytic metal and the metal forming said catalytic metal oxide being at least one metal selected from at least one of Groups Ib and VIIa of the Periodic Table or the iron or platinum groups
**characterized in that**
the modified ZSM-5 zeolite a) is obtainable by a process comprising subjecting a ZSM-5 zeolite starting material containing at least one metal selected from alkali or alkaline earth metals in a concentration of C₁ > 450 ppm to at least
an acid treatment comprising heating a hydrochloric acid solution of 0.5 to 5N to a temperature of 70° to 90°C and immersing the ZSM-5 zeolite starting material into such acid solution,
and optionally further
a steam treatment involving the steps of maintaining the ZSM-5 zeolite starting material for 10 to 20 hours in an atmosphere containing about 10% of water and at a temperature of 750° to 900°C,
and/or
a boiled water treatment involving the steps of subjecting the ZSM-5 zeolite starting material to a hydrating treatment, raising the temperature of an atmosphere around the ZSM-5 zeolite starting material in the hydrated state to a level of 550° to 600°C and maintaining it in such high-temperature atmosphere for four hours,
to remove a portion of the elements forming the ZSM-5 zeolite crystal structure and thereby produce a modified ZSM-5 zeolite having a unit cell volume V₁ which is smaller than the unit cell volume V₂ of the ZSM-5 zeolite starting material and corresponds to V₁ ≤ 5373 Å³, the modified ZSM-5 zeolite further having a concentration C₁ of alkali and/or alkaline earth metals of C₁ ≤ 450 ppm, and including an impurity which is at least one of Fe, Cu, Ni and Cr, the content C₂ of said impurity being ≤ 200 ppm.

2. Catalyst composition according to claim 1, wherein the process by which the modified ZSM-5 zeolite is obtainable, after the acid, steam and/or boiled water treatment further includes a heating treatment which comprises heating the modified ZSM-5 zeolite to a temperature higher than the heat-resisting temperature of the ZSM-5 starting material and near to but not exceeding the heat-resisting temperature of the modified ZSM-5 zeolite in the presence of water wherein the heat treatment comprises heating of modified ZSM-5 zeolite in an air atmosphere containing 10 % of water for 20 hours, measuring a BET specific surface area after heating by every 25°C and defining the heat-resisting temperature as temperature at which the BET specific surface area maintains 95% of the initial BET specific surface area.

3. Catalyst composition according to any one of claims 1 or 2, wherein the ZSM-5 zeolite starting material has a molar ratio of SiO₂/Al₂O₃ (Mr) ≥ 100.

4. Catalyst composition according to any one of claims 1 to 3, wherein said catalytic element b) is in a fine granular form and a particle size thereof being in a range from 0.05 µm (inclusive) to 50 µm (inclusive).

5. Catalyst composition according to any one of claims 1 to 4, wherein the catalytic element is contained as a mixture with the modified ZSM-5 zeolite.

6. Catalyst composition according to any one of claims 1 to 4, wherein the catalytic element and the modified ZSM-5 zeolite are contained in a two-layer structure, each layer comprising one of the components a) and b).

7. Use of a catalyst composition according to any one of claims 1 to 6 for the production of a catalyst for the conversion of exhaust gas emitted from an internal combustion engine.

8. Catalyst for the conversion of exhaust gas emitted from an internal combustion engine, comprising a catalyst composition according to any one of claims 1 to 6.

9. Catalyst according to claim 8, wherein it contains a support structure on which a layer of a catalytic composition is formed, the catalytic composition being comprised of a mixture of components a) and b).

10. Catalyst according to claim 8, wherein it contains a support structure on which an at least two-layered catalytic composition is formed, wherein a layer of the modified ZSM-5 zeolite is formed over a layer of the catalytic element.

11. Catalyst according to claim 8, wherein it contains a support structure on which an at least two-layered catalytic composition is present, wherein a layer of the catalytic element is formed over a layer of the modified ZSM-5 zeolite.

12. Catalyst according to any one of claims 8 to 11, comprising a honeycomb-shaped structure as the support material.

13. A process for producing a catalyst composition according to any one of claims 1 to 6, comprising preparation of a modified ZSM-5 zeolite by subjecting a ZSM-5 zeolite starting material containing at least one metal selected from alkali or alkaline earth metals in a concentration of C₁ > 450 ppm to at least
an acid treatment comprising heating a hydrochloric acid solution of 0.5 to 5N to a temperature of 70° to 90°C and immersing the ZSM-5 zeolite starting material into such acid solution,
and optionally further
a steam treatment involving the steps of maintaining the ZSM-5 zeolite starting material for 10 to 20 hours in an atmosphere containing about 10% of water and at a temperature of 750° to 900°C,
and/or
a boiled water treatment involving the steps of subjecting the ZSM-5 zeolite starting material to a hydrating treatment, raising the temperature of an atmosphere around the ZSM-5 zeolite starting material in the hydrated state to a level of 550° to 600°C and maintaining it in such high-temperature atmosphere for four hours,
to remove a portion of the elements forming the ZSM-5 zeolite crystal structure and thereby produce a modified ZSM-5 zeolite having a unit cell volume V₁ which is smaller than the unit cell volume V₂ of the ZSM-5 zeolite starting material and corresponds to V₁ ≤ 5373 Å³, the modified ZSM-5 zeolite further having a concentration C₁ of alkali and/or alkaline earth metals of C₁ ≤ 450 ppm, and including an impurity which is at least one of Fe, Cu, Ni and Cr, the content C₂ of said impurity being ≤ 200 ppm
and
forming a catalytic composition by combining the modified ZSM-5 zeolite with a catalytic element which is comprised of a ceramic carrier and at least one of a catalytic metal and a catalytic metal oxide carried in or on said carrier, said catalytic metal and the metal forming said catalytic metal oxide being at least one metal selected from at least one of Groups lb and Vlla of the Periodic Table or the iron or platinum groups.

14. Process according to claim 13,
wherein the ceramic carrier is placed in a solution containing a catalytic metal or catalytic metal oxide to produce a catalytic element wherein the catalytic metal or metal oxide is carried in the surface of the carrier, and then a modified ZSM-5 zeolite is added to prepare a slurry mixture of the catalyst composition.

15. Process according to claim 13,
wherein modified ZSM-5 zeolite and catalytic element are provided in form of adjacent layers on a support structure.

## Patentansprüche

1. Katalysatorzusammensetzung zur Umwandlung von Abgas, welches aus einem Verbrennungsmotor ausgestoßen wird, bestehend aus
a) einem modifizierten ZSM-5-Zeolith und
b) einem katalytischen Element, das aus einem keramischen Träger und mindestens einem katalytischen Metall oder katalytischen Metalloxid, das in oder auf dem Träger vorhanden ist besteht, wobei das katalytische Metall und das Metall, welches das katalytische Metalloxid bildet, mindestens ein Metall ist, das ausgewählt ist aus mindestens einer der Gruppen lb und Vlla des Periodensystems oder der Eisen- oder Platingruppen,
**dadurch gekennzeichnet, dass**
der modifizierte ZSM-5-Zeolith a) erhältlich ist durch ein Verfahren umfassend das Unterwerfen eines ZSM-5-Zeolith-Ausgangsmaterials, enthaltend mindestens ein Metall ausgewählt aus Alkali- oder Erdalkalimetallen in einer Konzentration von C₁ > 450 ppm, mindestens einer Säurebehandlung umfassend das Erhitzen einer 0,5 bis 5 N Chlorwasserstoffsäurelösung auf eine Temperatur von 70° bis 90°C und das Eintauchen des ZSM-5-Zeolith-Ausgangsmaterials in diese Säurelösung, und gegebenenfalls ferner
einer Dampfbehandlung, mit den Schritten des Haltens des ZSM-5-Zeolith-Ausgangsmaterials für 10 bis 20 Stunden in einer Atmosphäre enthaltend ungefähr 10% Wasser und bei einer Temperatur von 750° bis 900°C,
und/oder
einer Behandlung mit kochendem Wasser, mit den Schritten des Unterwerfens des ZSM-5-Zeolith-Ausgangsmaterials einer Hydratations-Behandlung, des Erhöhens der Temperatur einer Atmosphäre um das ZSM-5-Zeolith-Ausgangsmaterial in dem hydratisierten Zustand auf ein Level von 550° bis 600°C und des Haltens in dieser Hochtemperaturatmosphäre für 4 Stunden,
zur Entfernung eines Teils der Elemente, die die ZSM-5-Zeolith-Kristallstruktur bilden, und um dabei einen modifizierten ZSM-5-Zeolith mit einem Elementarzellvolumen V₁ herzustellen, das kleiner als das Elementarzellvolumen V₂ des ZSM-5-Zeolith-Ausgangsmaterials ist, und das V₁ ≤ 5373 Å³ entspricht, wobei der modifizierte ZSM-5-Zeolith ferner eine Konzentration C₁ an Alkali- und/oder Erdalkalimetallen von C₁ ≤ 450 ppm aufweist und eine Verunreinigung einschließt, die mindestens eine aus Fe, Cu, Ni und Cr ist, wobei der Gehalt C₂ dieser Verunreinigung ≤ 200 ppm beträgt.

2. Katalysatorzusammensetzung nach Anspruch 1,
wobei das Verfahren, durch welches der modifizierte ZSM-5-Zeolith erhältlich ist, nach der Säurebehandlung, Dampfbehandlung und/oder Behandlung mit kochendem Wasser ferner eine Hitzebehandlung einschließt, die das Erhitzen des modifizierten ZSM-5-Zeoliths auf eine Temperatur, die höher als die Hitzeresistenztemperatur des ZSM-5-Ausgangsmaterials und nahe der Hitzeresistenztemperatur des modifizierten ZSM-5-Zeoliths liegt, diese aber nicht überschreitet, in Gegenwart von Wasser umfasst, wobei die Hitzebehandlung das Erhitzen des modifizierten ZSM-5-Zeoliths für 20 Stunden in einer Luftatmosphäre enthaltend 10% Wasser, das Messen einer BET-spezifischen Oberfläche jeweils nach dem Erhitzen um 25°C und das Definieren der Hitzeresistenztemperatur als die Temperatur, bei der die BETspezifische Oberfläche 95% der anfänglichen BET-spezifischen Oberfläche beibehält, umfasst.

3. Katalysatorzusammensetzung nach einem der Ansprüche 1 oder 2,
worin das ZSM-5-Zeolith-Ausgangsmaterial ein molares Verhältnis SiO₂/Al₂O₃ (Mr) ≥ 100 aufweist.

4. Katalysatorzusammensetzung nach einem der Ansprüche 1 bis 3,
worin das katalytische Element b) in feingranulierter Form vorliegt und die Teilchengröße davon in einem Bereich von 0,05 µm (einschließlich) bis 50 µm (einschließlich) liegt.

5. Katalysatorzusammensetzung nach einem der Ansprüche 1 bis 4,
worin das katalytische Element als eine Mischung mit dem modifizierten ZSM-5-Zeolith enthalten ist.

6. Katalysatorzusammensetzung nach einem der Ansprüche 1 bis 4,
worin das katalytische Element und der modifizierte ZSM-5-Zeolith in einer Zwei-Schicht-Struktur enthalten sind, wobei jede Schicht eine der Komponenten a) und b) umfasst.

7. Verwendung einer Katalysatorzusammensetzung nach einem der Ansprüche 1 bis 6 zur Herstellung eines Katalysators zur Umwandlung von Abgas, das von einem Verbrennungsmotor ausgestoßen wird.

8. Katalysator zur Umwandlung von Abgas, das von einem Verbrennungsmotor ausgestoßen wird, umfassend eine Katalysatorzusammensetzung nach einem der Ansprüche 1 bis 6.

9. Katalysator nach Anspruch 8,
wobei dieser eine Trägerstruktur enthält, auf der eine Schicht einer katalytischen Zusammensetzung gebildet ist, wobei die katalytische Zusammensetzung aus einer Mischung der Komponenten a) und b) besteht.

10. Katalysator nach Anspruch 8,
wobei dieser eine Trägerstruktur enthält, auf der eine mindestens zweischichtige katalytische Zusammensetzung gebildet ist, worin eine Schicht des modifizierten ZSM-5-Zeoliths über eine Schicht des katalytischen Elements gebildet ist.

11. Katalysator nach Anspruch 8,
wobei dieser eine Trägerstruktur enthält, auf der eine mindestens zweischichtige katalytische Zusammensetzung vorhanden ist, worin eine Schicht des katalytischen Elements über eine Schicht des modifizierten ZSM-5-Zeoliths gebildet ist.

12. Katalysator nach einem der Ansprüche 8 bis 11,
umfassend eine Honigwaben-artig geformte Struktur als das Trägermaterial.

13. Verfahren zur Herstellung einer Katalysatorzusammensetzung nach einem der Ansprüche 1 bis 6,
umfassend die Herstellung eines modifizierten ZSM-5-Zeoliths durch das Unterwerfen eines ZSM-5-Zeolith-Ausgangsmaterials, enthaltend mindestens ein Metall ausgewählt aus Alkali- oder Erdalkalimetallen in einer Konzentration von C₁ > 450 ppm, mindestens einer
Säurebehandlung umfassend das Erhitzen einer 0,5 bis 5 N Chlorwasserstoffsäurelösung auf eine Temperatur von 70° bis 90°C und das Eintauchen des ZSM-5-Zeolith-Ausgangsmaterials in diese Säurelösung,
und gegebenenfalls ferner
einer Dampfbehandlung, mit den Schritten des Haltens des ZSM-5-Zeolith-Ausgangsmaterials für 10 bis 20 Stunden in einer Atmosphäre enthaltend ungefähr 10% Wasser und bei einer Temperatur von 750° bis 900°C,
und/oder
einer Behandlung mit kochendem Wasser, mit den Schritten des Unterwerfens des ZSM-5-Zeolith-Ausgangsmaterials einer Hydratations-Behandlung, des Erhöhens der Temperatur einer Atmosphäre um das ZSM-5-Zeolith-Ausgangsmaterial in dem hydratisierten Zustand auf ein Level von 550° bis 600°C und des Haltens in dieser Hochtemperaturatmosphäre für 4 Stunden,
zur Entfernung eines Teils der Elemente, die die ZSM-5-Zeolith-Kristallstruktur bilden, und um dabei einen modifizierten ZSM-5-Zeolith mit einem Elementarzellvolumen V₁ herzustellen, das kleiner als das Elementarzellvolumen V₂ des ZSM-5-Zeolith-Ausgangsmaterials ist, und das V₁ ≤ 5373 Å³ entspricht, wobei der modifizierte ZSM-5-Zeolith ferner eine Konzentration C₁ an Alkali- und/oder Erdalkalimetallen von C₁ ≤ 450 ppm aufweist und eine Verunreinigung einschließt, die mindestens eine von Fe, Cu, Ni und Cr ist, wobei der Gehalt C₂ dieser Verunreinigung ≤ 200 ppm beträgt
und das Bilden einer katalytischen Zusammensetzung durch die Kombination eines modifizierten ZSM-5-Zeoliths mit einem katalytischen Element, das aus einem keramischen Träger und mindestens einem katalytischen Metall oder einem katalytischen Metalloxid besteht, welches in oder auf dem Träger vorhanden ist, wobei das katalytische Metall und das Metall, welches das katalytische Metalloxid bildet, mindestens ein Metall ist, das ausgewählt ist aus mindestens einer der Gruppen Ib und VIIa des Periodensystems oder der Eisen- oder Platingruppen.

14. Verfahren nach Anspruch 13,
wobei der keramische Träger in eine Lösung eingebracht wird, die ein katalytisches Metall oder katalytisches Metalloxid enthält, um ein katalytisches Element herzustellen, worin das katalytische Metall oder Metalloxid in der Oberfläche des Trägers vorhanden ist, und dann ein modifizierter ZSM-5-Zeolith hinzugefügt wird, zur Herstellung einer Aufschlämmungsmischung der Katalysatorzusammensetzung.

15. Verfahren nach Anspruch 13,
wobei der modifizierte ZSM-5-Zeolith und das katalytische Element in Form von benachbarten Schichten auf einer Trägerstruktur bereitgestellt sind.

## Revendications

1. Composition de catalyseur pour la conversion d'un gaz d'échappement émis par un moteur à combustion interne, constituée par :
a) une zéolithe ZSM-5 modifiée, et
b) un élément catalytique, qui est composé d'un support céramique et d'au moins un parmi un métal catalytique et un oxyde de métal catalytique supportés dans ou sur ledit support, ledit métal catalytique et le métal formant ledit oxyde de métal catalytique étant au moins un métal choisi parmi au moins l'un des Groupes Ib et VIIa de la Classification périodique des éléments ou les groupes du fer ou du platine ;
**caractérisée en ce que**,
la zéolithe ZSM-5 modifiée a) est susceptible d'être obtenue par un procédé comprenant le fait de soumettre un matériau de départ zéolithe ZSM-5 contenant au moins un métal choisi parmi les métaux alcalins ou alcalino-terreux en une concentration de C₁ > 450 ppm à au moins :
un traitement acide comprenant le chauffage d'une solution d'acide chlorhydrique de 0,5 à 5N à une température de 70° C à 90° C et l'immersion du matériau de départ zéolithe ZSM-5 dans ladite solution acide ;
et éventuellement en outre, à
un traitement à la vapeur d'eau comprenant les étapes de maintien du matériau de départ zéolithe ZSM-5 pendant 10 à 20 heures dans une atmosphère contenant environ 10 % d'eau et à une température de 750° à 900° C,
et/ou
un traitement à l'eau portée à ébullition comprenant les étapes consistant à soumettre le matériau de départ zéolithe ZSM-5 à un traitement d'hydratation, à élever la température de l'atmosphère autour du matériau de départ zéolithe ZSM-5 à l'état hydraté à un niveau de 550° à 600° C et à le maintenir sous une telle atmosphère à température élevée pendant quatre heures,
pour retirer une partie des éléments formant la structure cristalline de la zéolithe ZSM-5 et de cette façon produire une zéolithe ZSM-5 modifiée ayant un volume de cellule unité V₁, qui est inférieur au volume de cellule unité V₂ du matériau de départ zéolithe ZSM-5 et correspond à V₁ ≤ 5373 Å³, la zéolithe ZSM-5 modifiée ayant en outre une concentration C₁ de métaux alcalins et/ou alcalino-terreux de C₁ ≤ 450 ppm, et incluant une impureté qui est au moins l'une parmi Fe, Ni et Cr, le contenu C₂ de ladite impureté étant ≤ 200 ppm.

2. Composition de catalyseur selon la revendication 1, dans laquelle le procédé par lequel la zéolithe ZSM-5 modifiée est susceptible d'être obtenue, après traitement acide, à la vapeur d'eau et/ou à l'eau portée à ébullition inclut en outre un traitement thermique qui comprend le chauffage de la zéolithe ZSM-5 modifiée à une température supérieure à la température de résistance à la chaleur du matériau de départ zéolithe ZSM-5 et proche de, mais ne dépassant pas, la température de résistance à la chaleur de la zéolithe ZSM-5 modifiée en présence d'eau, dans laquelle le traitement thermique comprend le chauffage de la zéolithe ZSM-5 modifiée dans une atmosphère d'air contenant 10 % d'eau pendant 20 heures, pour mesurer une surface spécifique BET après le chauffage tous les 25° C et définir la température de résistance à la chaleur comme étant la température à laquelle la surface spécifique BET maintient 95 % de la surface spécifique BET initiale.

3. Composition de catalyseur selon l'une quelconque des revendications 1 ou 2, dans laquelle le matériau de départ zéolithe ZSM-5 a un rapport molaire de SiO₂ / Al₂O₃ (Mr) ≥ 100.

4. Composition de catalyseur selon l'une quelconque des revendications 1 à 3, dans laquelle ledit élément catalytique b) se présente sous forme de grains fins et une taille de particule de celui-ci étant dans la gamme de 0,05 µm (inclus) à 50 µm (inclus).

5. Composition de catalyseur selon l'une quelconque des revendications 1 à 4, dans laquelle ledit élément catalytique est contenu sous forme d'un mélange avec la zéolithe ZSM-5 modifiée.

6. Composition de catalyseur selon l'une quelconque des revendications 1 à 4, dans laquelle ledit élément catalytique et la zéolithe ZSM-5 modifiée sont contenus dans une structure à deux couches, chaque couche comprenant l'un des composants a) et b).

7. Utilisation d'une composition de catalyseur selon l'une quelconque des revendications 1 à 6 pour la production d'un catalyseur pour la conversion d'un gaz d'échappement émis par un moteur à combustion interne.

8. Catalyseur pour la conversion d'un gaz d'échappement émis par un moteur à combustion interne, comprenant une composition de catalyseur selon l'une quelconque des revendications 1 à 6.

9. Catalyseur selon la revendication 8, dans lequel celui-ci contient une structure de support sur laquelle une couche d'une composition catalytique est formée, la composition catalytique étant constituée d'un mélange des composants a) et b).

10. Catalyseur selon la revendication 8, dans lequel celui-ci contient une structure de support sur laquelle au moins une composition catalytique à deux couches est formée, dans laquelle une couche de la zéolithe ZSM-5 modifiée est formée sur une couche de l'élément catalytique.

11. Catalyseur selon la revendication 8, dans lequel celui-ci contient une structure de support sur laquelle au moins une composition catalytique à deux couches est présente, dans laquelle une couche de l'élément catalytique est formée sur une couche de la zéolithe ZSM-5 modifiée.

12. Catalyseur selon l'une quelconque des revendications 8 à 11, comprenant une structure en nid d'abeilles comme matériau de support.

13. Procédé pour la production d'une composition de catalyseur selon l'une quelconque des revendications 1 à 6, comprenant la préparation d'une zéolithe ZSM-5 modifiée en soumettant un matériau de départ zéolithe ZSM-5 contenant au moins un métal choisi parmi les métaux alcalins ou alcalino-terreux selon une concentration de C₁ > 450 ppm à au moins :
un traitement acide comprenant le chauffage d'une solution d'acide chlorhydrique de 0,5 à 5N à une température de 70° C à 90° C et l'immersion du matériau de départ de zéolithe ZSM-5 dans ladite solution acide ;
et éventuellement en outre,
un traitement à la vapeur d'eau comprenant les étapes de maintien du matériau de départ zéolithe ZSM-5 pendant 10 à 20 heures dans une atmosphère contenant environ 10 % d'eau et à une température de 750° à 900° C ;
et/ou
un traitement à l'eau portée à ébullition comprenant les étapes consistant à soumettre le matériau de départ zéolithe ZSM-5 à un traitement d'hydratation, à élever la température d'une l'atmosphère autour du matériau de départ zéolithe ZSM-5 à l'état hydraté à un niveau de 550° à 600° C et à le maintenir sous une telle atmosphère à température élevée pendant quatre heures,
pour retirer une partie des éléments formant la structure cristalline de la zéolithe ZSM-5 et de cette façon produire une zéolithe ZSM-5 modifiée ayant un volume de cellule unité V₁, qui est inférieur au volume de cellule unité V₂ du matériau de départ zéolithe ZSM-5 et correspond à V₁ ≤ 5373 Å³, la zéolithe ZSM-5 modifiée ayant en outre une concentration C₁ de métaux alcalins et/ou alcalino-terreux de C₁ ≤ 450 ppm, et incluant une impureté qui est au moins l'une parmi Fe, Ni et Cr, le contenu C₂ de ladite impureté étant ≤ 200 ppm ;
et
formation d'une composition catalytique en combinant la zéolithe ZSM-5 modifiée à un élément catalytique qui est composé d'un support céramique et d'au moins un parmi métal catalytique et un oxyde de métal catalytique supportés dans ou sur ledit support, ledit métal catalytique et le métal formant ledit oxyde de métal catalytique étant au moins un métal parmi au moins l'un des Groupes Ib et VIIa de la Classification périodique des éléments ou les groupes du fer ou du platine.

14. Procédé selon la revendication 13, dans lequel le support céramique est placé dans une solution contenant un métal catalytique ou un oxyde de métal catalytique pour produire un élément catalytique dans lequel le métal catalytique ou l'oxyde de métal catalytique est supporté sur la surface du support, puis une zéolithe ZSM-5 modifiée est additionnée pour préparer un mélange en suspension de la composition de catalyseur.

15. Procédé selon la revendication 13, dans lequel la zéolithe ZSM-5 modifiée et l'élément catalytique se présentent sous la forme de couches adjacentes sur une structure de support.
